(19) **Europäisches Patentamt / European Patent Office / Office européen des brevets**

(11) **EP 3 336 595 B1**

(12) **FASCICULE DE BREVET EUROPEEN**

(45) Date de publication et mention
de la délivrance du brevet:
**19.05.2021 Bulletin 2021/20**

(51) Int Cl.:
*G02B 17/06* (2006.01)   *G02B 23/06* (2006.01)
*G02B 26/06* (2006.01)   *G02B 27/00* (2006.01)

(21) Numéro de dépôt: **17205146.8**

(22) Date de dépôt: **04.12.2017**

(54) **TELESCOPE COMPACT PRESENTANT UNE PLURALITE DE FOCALES COMPENSE PAR UN MIROIR DEFORMABLE**

KOMPAKTES TELESKOP, DAS EINE VIELZAHL VON BRENNWEITEN AUFWEIST, DIE DURCH EINEN DEFORMIERBAREN SPIEGEL KOMPENSIERT WIRD

COMPACT TELESCOPE HAVING A PLURALITY OF FOCAL DISTANCES COMPENSATED BY A DEFORMABLE MIRROR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2016 FR 1601769**

(43) Date de publication de la demande:
**20.06.2018 Bulletin 2018/25**

(73) Titulaire: **Thales**
**92400 Courbevoie (FR)**

(72) Inventeur: **TETAZ, Nicolas**
**06156 CANNES (FR)**

(74) Mandataire: **Marks & Clerk France**
**Immeuble "Visium"**
**22, avenue Aristide Briand**
**94117 Arcueil Cedex (FR)**

(56) Documents cités:
**EP-A1- 1 637 914   US-A- 4 993 818**
**US-A- 5 144 476**

- ZHAO XIN ET AL: "Three mirror anastigmatic zoom system using deformable mirrors", INTERNATIONAL SYMPOSIUM ON PHOTOELECTRONIC DETECTION AND IMAGING 2011: SPACE EXPLORATION TECHNOLOGIES AND APPLICATIONS, SPIE, 1000 20TH ST. BELLINGHAM WA 98225-6705 USA, vol. 8196, no. 1, 9 juin 2011 (2011-06-09) , pages 1-8, XP060016106, DOI: 10.1117/12.900730

**Description**

**DOMAINE DE L'INVENTION**

Le domaine de l'invention est celui des télescopes, notamment celui des télescopes d'observations embarqués dans des satellites. Plus précisément, le domaine de l'invention concerne les systèmes catoptriques à grandes focales.

**ETAT DE LA TECHNIQUE**

Les télescopes spatiaux actuels sont à focale unique. Un type de télescope connu est le télescope de type Korsh. Le télescope de type Korsh, également dénommé TMA (acronyme de l'expression anglo-saxonne « Three Mirors Anastigmat ») est un télescope anastigmat à trois miroirs asphériques (soit de type Concave-Convexe-Concave) qui comprend au moins un premier miroir M1 concave, un second miroir M2 convexe et un troisième miroir M3 concave. Les trois miroirs étant asphériques et de forme classique pour un tel télescope. Les premier, deuxième et troisième miroirs M1, M2 et M3 sont asphériques, de formes fixes, chaque miroir étant caractérisé par au moins deux paramètres, un rayon de courbure R et une conique c.
Ce système optique présente un axe optique O bien connu de l'homme de l'art, défini par le rayon passant par le centre de la pupille d'entrée $P_E$ et perpendiculaire à cette pupille.
Les trois miroirs M1, M2 et M3 sont agencés de sorte que le premier miroir et le second miroir forment d'un objet à l'infini une image intermédiaire située entre le second miroir et le troisième miroir, le troisième miroir formant de cette image intermédiaire une image finale dans le plan focal du télescope dans lequel est placé un détecteur D. Par application des équations de Korsch bien connues de l'homme de l'art on calcule aisément les positions et paramètres respectifs des trois miroirs. La solution théorique est de très bonne qualité, ce qui fait tout l'intérêt de ce type de télescope.
La qualité d'un système optique s'évalue par comparaison entre l'onde lumineuse idéale limitée par la diffraction et l'onde lumineuse réelle à la sortie du système optique tenant compte des défauts du système optique traversé. L'analyse de la différence entre onde théorique et onde réelle permet d'identifier les types de défauts ou aberrations du système optique.
Il est connu que les principales aberrations géométriques sont : l'aberration sphérique, l'astigmatisme, la coma, la courbure de champ (defocus dans le champ) et la distorsion.
Des polynômes, et plus particulièrement les polynômes de Zernike, sont classiquement utilisés pour qualifier plus facilement les différents types d'aberrations d'un front d'onde (soit une surface) à la sortie d'un système optique.
Les surfaces de Zernike sont les plus couramment utilisées. Une surface de Zernike est définie en coordonnées polaires dans un espace ($\rho$, $\theta$, z), et si z($\rho$, $\theta$) représente la coordonnée z d'un point de cette surface, on a la relation :

$$z(\rho,\theta) = \frac{c(\rho^2)}{1+\sqrt{1-(1+k)c^2\rho^2}} + \sum C_j Z_j$$

Zj étant un polynôme de Zernike d'ordre j et Cj étant la constante associée à ce polynôme, j étant un indice variant respectivement entre 0 et un nombre entier, k étant la constante de conicité et c la courbure de la surface.
Une surface quelconque décomposée suivant des polynômes est dénommée surface $\varphi$-polynomiale. Cette surface est donc caractérisée par des valeurs des coefficients de ces polynômes.
L'intérêt de la décomposition de font d'onde en polynômes de Zernicke orthogonaux est que chaque polynôme de la base considérée correspond à une catégorie d'aberration différente. Il est alors possible de connaître la nature des aberrations présentes dans un front d'onde.
La table ci-dessous illustre les différents polynômes « Fringe Zernike » en fonction que de leur ordre (ici 1 à 16), ainsi que le type l'aberration correspondant.

| Ordre | Polynôme | Aberration (s) |
|---|---|---|
| 1 | 1 | Piston |
| 2 | $\rho$ Cos[$\theta$] | Inclinaison en x |
| 3 | $\rho$ Sin[$\theta$] | Inclinaison en y |
| 4 | $-1 + 2\rho^2$ | Focalisation |
| 5 | $\rho^2$ Cos[$2\theta$] | Astigmatisme à 0° |

(suite)

| Ordre | Polynôme | Aberration (s) |
|---|---|---|
| 6 | $\rho^2 \text{Sin}[2\theta]$ | Astigmatisme à 45° |
| 7 | $\rho(-2 + 3\rho^2)\text{Cos}[\theta]$ | Coma en x |
| 8 | $\rho(-2 + 3\rho^2)\text{Sin}[\theta]$ | Coma en y |
| 9 | $1 - 6\rho^2 + 6\rho^4$ | Sphéricité et focalisation |
| 10 | $\rho^3\text{Cos}[3\theta]$ | Tri feuille |
| 11 | $\rho^3\text{Sin}[3\theta]$ | Tri feuille |
| 12 | $\rho^2(-3 + 4\rho^2)\text{Cos}[2\theta]$ | Astigmatisme ordre 2 |
| 13 | $\rho^2(-3 + 4\rho^2)\text{Sin}[2\theta]$ | Astigmatisme ordre 2 |
| 14 | $\rho(3 - 12p^2 + 10\rho^4)\text{Cos}[\theta]$ | Coma en x ordre 2 |
| 15 | $p(3 - 12\rho^2 + 10\rho^4)\text{Sin}[\theta]$ | Coma en y ordre 2 |
| 16 | $-1 + 12\rho^2 - 30\rho^4 + 20\rho^6$ | Sphéricité ordre 2 |

En adoptant la définition des polynômes de Fringe Zernike, les différents types d'aberration correspondent à :

- le focus correspond au terme Z4,

- l'astigmatisme correspond aux termes Z5 et Z6,

- la coma aux termes Z7 et Z8 et

- l'aberration sphérique de premier ordre à Z9.

- l'aberration sphérique de deuxième ordre à Z16

Classiquement il est connu d'améliorer la qualité de l'image de des instruments optiques par adjonction d'un miroir déformable MD en pupille de sortie, communément dénommé à surface « free form » » ou de forme libre. La
solution théorique du télescope à 3 miroirs Korsch étant de très bonne qualité, classiquement le miroir déformable n'intervient pas dans la combinaison optique du télescope et est utilisé uniquement pour compenser les défauts dû à l'imperfection de réalisation du système réel par rapport à la solution théorique.

- au sol pour compenser les turbulences atmosphériques (application historique des miroirs déformables),
- en vol pour compenser les défauts du miroir M1. En effet le miroir M1 étant complexe à réaliser, le miroir déformable permet de relâcher les contraintes de réalisation, tout en conservant une bonne performance. De même, on peut s'autoriser un miroir M1 plus léger et moins rigide, car ses déformations seront compensées par le miroir déformable.

Ainsi, on utilise généralement un miroir déformable en pupille de sortie pour corriger les aberrations constantes dans le champ. Lorsqu'il est positionné en pupille d'un instrument, la déformation du miroir déformable par ajout d'un polynome de Zernike introduit des aberrations constantes dans le champ. Par exemple, si l'on introduit une valeur non nulle pour le polynôme Z5 sur le miroir déformable, chaque point du champ sera impacté par de l'astigmatisme.

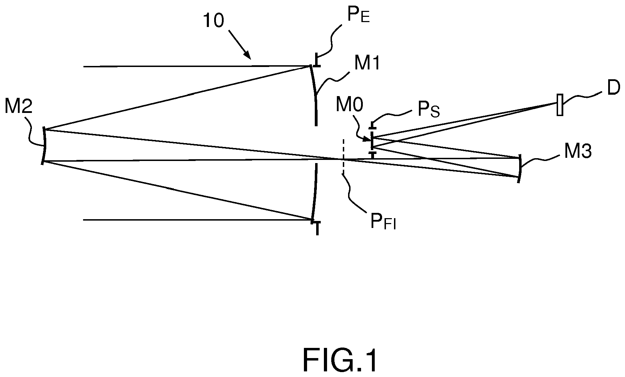

La figure 1 illustre un télescope de type Korsch 10 présentant un miroir déformable MD disposé au niveau de la pupille de sortie $P_S$ du télescope.
La surface S à donner au miroir déformable pour permettre la correction des défauts est dénommée surface « free form », signifiant qu'elle n'a pas de symétrie de révolution.
Il existe différentes définitions des surfaces freeform. Généralement, chaque définition répond à un besoin particulier, est adaptée à un mode de calcul et d'optimisation spécifique. Quelle que soit la formulation mathématique utilisée pour définir une surface « freeform », on peut passer d'une formulation à l'autre par une conversion mathématique. Dit autrement une même surface « freeform » peut être définie par plusieurs formulations mathématiques. A titres d'exemples, les définitions mathématiques d'une surface « freeform » peuvent être les suivantes :

- Surface « freeform » définie par des polynômes XY. En clair, cette surface étant définie dans un espace (x, y, z), si z(x, y) représente la coordonnée z d'un point de cette surface, on a la relation :

$$z(x,y) = \frac{c(x^2 + y^2)}{1 + \sqrt{1 - (1+k)c^2(x^2 + y^2)}} + \sum A_i x^j y^k$$

c étant la courbure de la surface, k étant la constante de conicité, $A_i$ étant des constantes, i, j et k étant des indices variant respectivement entre 0 et trois nombres entiers.

Cette surface correspond à une extension de la définition classique des surfaces asphériques en la généralisant à une surface sans symétrie de révolution ;

- Surface « free form » définie par des $\varphi$ polynômes, tels les polynômes de Zernike définis précédemment ou les polynômes de Q-Forbes

  La publication de G.W. Forbes intitulée « Characterizing the shape of freeform optics » 30.01.2012/Vol.20, N° 3/Optics Express 2483 décrit les surfaces définies par des phi-polynômes de Q-Forbes.

- Surface Freeform définie par des équations locales de sous-surfaces « freeform » de définition différente.

- Surface Freeform définie par des descriptions hybrides comme, par exemple, des surfaces mélangeant des surfaces phi-polynomiales et des surfaces dites « NURBS », acronyme signifiant « Non-Uniform Rational Basis Splines » ou surfaces « B-Splines Rationnelles Non Uniformes ».

Le miroir MD est déformable et pilotable, c'est à dire que l'on peut obtenir une surface quelconque souhaitée en pilotant le miroir, la surface souhaitée du MD étant calculée de manière à compenser les défauts du système réel. On décompose la surface souhaitée à l'aide des polynômes, et on génère cette surface en appliquant de manière maîtrisée les bons coefficients via le système de pilotage du miroir. On peut ensuite faire évoluer la forme de la surface en modifiant les valeurs des coefficients.

Il est ainsi possible en pilotant directement la valeur des coefficients Cj d'introduire dans le design les aberrations voulues.

Un exemple de miroir MD est un miroir déformable MADRAS :Miroir Actif Déformable et Régulé pour Applications Spatiales.

Il peut être intéressant de pouvoir changer la focale en vol. En effet, changer la focale en vol permet de changer le champ de vue et/ou la résolution de l'image avec un seul et même instrument.

Il existe actuellement deux familles de télescopes :

- les télescopes bifocaux qui permettent d'effectuer une prise d'image à haute résolution mais sur un champ étroit ou une prise d'image sur un champ étendu mais à plus faible résolution, et
- les télescopes à zoom réflectif continu permettant un changement de focale en vol.

Comme exemples de télescopes bifocaux, on peut citer ceux qui reposent sur une séparation d'une voie commune en deux voies de focales différentes. La séparation peut se faire de manière spectrale : un même champ est séparé par une lame dichroique si le domaine de longueur d'onde permet cette séparation spectrale (ex : visible et infrarouge). Elle peut se faire en séparant le flux reçu en flux réfléchi et flux transmis, au moyen d'une densité optique s'il s'agit d'un domaine de longueur d'onde non disjoint (ex : 50% du flux est réfléchi, 50% transmis).

Avantages de ces solutions bifocales à séparation de voie commune :

- Fonction bifocale en simultanée,
- Observation d'un champ de vue commun.

Inconvénients de ces solutions :

- Ajout d'éléments optiques (lame dichroique/densité + miroirs/lentilles spécifiques à chacune des voies),
- Détecteurs spécifiques à chaque voie,
- Si le domaine spectral des voies n'est pas disjoint, cela nécessite de perdre une partie importante du flux,
- Seulement bifocal.

On peut aussi citer les télescopes à séparation dans le champ de vue : les deux voies n'ont alors pas le même champ de vue.

Avantage de ces solutions bifocales à séparation dans le champ de vue :

- fonction bifocale en simultanée.

Inconvénients de ces solutions :

- Ajout d'éléments optiques : miroirs/lentilles spécifiques à chacune des voies,
- Détecteurs spécifiques à chaque voie,
- Observation d'un champ de vue différent,
- Seulement bifocal.

Une autre solution bifocale décrite dans le brevet US 6084727 permet de changer la focale du télescope en insérant des éléments réflectifs sur le trajet optique.

Avantages de cette solution à insertion d'éléments réflectifs :

- Un seul détecteur,
- Observation d'un champ commun.

Inconvénients de cette solution :

- Ajout d'éléments optiques : miroirs spécifiques à l'une des voies,
- Seulement bifocal,
- Fonction bifocale non simultanée.

Comme exemple de télescope à zoom réflectif continu, on peut citer le télescope décrit dans le brevet US 6333811 ; il est basé sur un télescope de type Cassegrain avec reprise d'image dont le grandissement est variable ce qui permet d'obtenir un zoom continu.

Avantages de cette solution :

- Un seul détecteur,
- Zoom continu,
- Observation d'un champ commun,
- Pas de modification de la forme des miroirs.

Inconvénients de cette solution :

- Le nombre de miroirs : 7 miroirs dont 3 asphériques, 2 « freeform » et 1 miroir plan de renvoi,
- Déplacement de deux miroirs freeforms dont le positionnement peut être sensible,
- Télescope de type Cassegrain, donc à champ limité.

Il existe par ailleurs des zooms utilisant des miroirs à rayons de courbure déformables, dont un exemple est illustré dans la publication de Kristof Seidl et al. : « Wide field-of-view all-reflective objectives designed for multispectral image acquisition in photogrammetric applications ».

Avantages de cette solution :

- Un seul détecteur,
- Zoom continu,
- Observation d'un champ commun,
- Pas de déplacement des miroirs.

Inconvénients de cette solution :

- Trop encombrant pour de longues focales, par exemple supérieures à 10m,
- Les miroirs déformables ne fonctionnent que pour des miroirs sphériques à petits diamètres de l'ordre de quelques cm : ils ne sont donc pas compatibles des tailles de pupilles des télescopes spatiaux typiquement supérieures à 0.5m.

D'autres télescopes conventionnels sont divulgués dans les documents US4993818, EP1637914, US5144476, ainsi que dans la publication de ZHAO XIN et al: "Three mirror anastigmatic zoom system using deformable mirrors",INTERNATIONAL SYMPOSIUM ON PHOTOELECTRONIC DETECTION AND IMAGING 2011: SPACE EXPLORATION TECHNOLOGIES AND APPLICATIONS, SPIE, 1000 20TH ST. BELLINGHAM WA 98225-6705 USA, vol. 8196, no. 1, 9 juin 2011, pages 1-8.

Un but de la présente invention est de palier aux inconvénients précités en proposant un télescope à trois miroirs asphériques multifocal, mono détecteur et compact, fonctionnant pour des diamètres de pupille importants, avec un champ de vue plus important que celui d'un Cassegrain (>1°), et présentant une très grande qualité d'image pour toutes les focales.

## DESCRIPTION DE L'INVENTION

La présente invention a pour objet un télescope tel que défini dans la revendication indépendante 1, ainsi qu'un procédé de détermination de paramètres d'un télescope tel que défini dans la revendication indépendante 10.

Préférentiellement la forme de la surface du miroir déformable comprend en outre une aberration sphérique de deuxième ordre pour améliorer encore la qualité d'image selon ledit critère.

Avantageusement, la nouvelle conicité s'écarte de la conicité initiale de plus de 5% et de moins de 30 %.

Selon un mode de réalisation une nouvelle conicité du premier miroir et une nouvelle conicité du deuxième miroir sont déterminées à partir respectivement d'une conicité initiale du premier miroir et d'une conicité initiale du deuxième miroir, les conicités initiales étant déterminées à partir des équation de Korsch, les nouvelles conicités étant déterminées de manière à améliorer encore la qualité d'image dudit télescope selon ledit critère.

Préférentiellement la surface du miroir déformable est définie à partir de coefficients de polynômes. Avantageusement les coefficients sont les coefficients des polynômes de Fringe Zernike.

Selon un mode de réalisation on définit :

- un astigmatisme positif comme un astigmatisme pour lequel un foyer tangentiel se situe avant un foyer sagittal,
- un astigmatisme négatif comme un astigmatisme pour lequel un foyer sagittal se situe avant un foyer tangentiel,
- une coma positive comme une coma pour laquelle une forme de la tache image d'un point source est une « comète » dont la queue s'éloigne de l'axe optique et,
- une coma négative comme une coma pour laquelle une forme de la tache image d'un point source est une « comète » dont la queue est dirigée vers l'axe optique,
  les aberrations compensables étant de l'astigmatisme positif et de la coma positive pour la focale maximale, de l'astigmatisme positif et de la coma négative pour la focale minimale.

Selon un mode de réalisation, la nouvelle conicité du troisième miroir est déterminée de manière à modifier le signe de l'astigmatisme du télescope pour la focale minimale, sans la présence du miroir déformable.

Préférentiellement le critère prédéterminé consiste à minimiser une erreur de forme d'onde.

Selon un mode de réalisation, le télescope selon l'invention présente une pluralité de focales intermédiaires, la forme de la surface du miroir déformable associée à chaque focale intermédiaire étant calculée à partir de la forme de la surface pour les valeurs de focale minimale et maximale.

D'autres caractéristiques, buts et avantages de la présente invention apparaîtront à la lecture de la description détaillée qui va suivre et en regard des dessins annexés donnés à titre d'exemples non limitatifs et sur lesquels :

La figure 1 déjà citée illustre un télescope de type Korsch monofocal présentant un miroir déformable disposé au niveau de la pupille de sortie du télescope.

La figure 2 illustre un télescope de type Korsch multifocal vu dans un plan YZ, la focale étant rendue variable par déglacement du troisième miroir sur l'axe optique. La figure 2a décrit le système optique pour la focale maximale et la figure 2b décrit le système optique pour la focale minimale.

La figure 3 illustre le télescope de la figure 2 vu dans le plan XZ, la figure 3a décrit le système optique pour la focale maximale et la figure 3b décrit le système optique pour la focale minimale.

La figure 4a décrit une première variante de moyen de variation du chemin optique entre le troisième miroir et le détecteur D.

La figure 4b illustre une deuxième variante de moyen de variation du chemin optique entre le troisième miroir et le détecteur D dans laquelle le détecteur D est fixe, les moyens de variation du chemin optique comprenant deux miroirs T1 et T2 en forme de toit, pour une position du miroir T2.

La figure 4c illustre la deuxième variante de moyen de variation du chemin optique entre le troisième miroir et le détecteur D dans laquelle le détecteur D est fixe, les moyens de variation du chemin optique comprenant deux miroirs T1 et T2 en forme de toit, pour une autre position du miroir T2.

La figure 5 illustre les aberrations présentes dans le plan focal pour le télescope bifocal dont les miroirs asphériques M1, M2 et M3 ont les paramètres initiaux obtenus en résolvant les équations de Korsch. La figure 5a illustre ces aberrations lorsque le télescope fonctionne à la focal maximale, et la figure 5b illustre ces aberrations lorsque le télescope fonctionne à la focale minimale.

La figure 6 décrit la convention signe utilisée pour certaines catégories d'aberrations.

La figure 7 schématise un télescope de type Korsh selon l'invention.

La figure 8 illustre, pour le système initial, les aberrations résultantes suite à l'introduction d'aberration sphérique $Z9_{MD}$ sur un miroir déformable en fonction de sa position relative par rapport à la pupille de sortie effective, lorsque MD est disposé en aval de la pupille de sortie effective. La figure 8a correspond à $Z9_{MD} < 0$ et la figure 8b à $Z9_{MD} > 0$.

La figure 9 illustre, pour le système initial, les aberrations résultantes suite à l'introduction d'aberration sphérique $Z9_{MD}$ sur un miroir déformable en fonction de sa position relative par rapport à la pupille de sortie effective, lorsque MD est disposé en amont de la pupille de sortie effective. La figure 9a correspond à $Z9_{MD} < 0$ et la figure 9b à $Z9_{MD} > 0$.

La figure 10 décrit l'évolution de la valeur moyenne de l'astigmatisme du télescope en fonction de la valeur de conicité du M3.

La figure 11 illustre les différentes aberrations présentes dans le plan focal du télescope, avec M3 présentant une conicité c'3=-0.52. La figure 11a illustre les différentes aberrations pour la focale max et la figure 11b pour la focale min.

La figure 12 illustre l'évolution de la valeur quadratique moyenne de l'erreur de forme d'onde WFE RMS en fonction de la valeur de conicité u M3.

La figure 13 illustre les différentes aberrations dans le plan focal d'un télescope selon l'invention, le télescope présentant une nouvelle conicité c'3 du miroir M3, et pour le miroir déformable, une positon médiane Pm et des valeurs de $Z9_{MD}$ et de $Z4_{MD}$ ($Z9_{MD/max}$ et $Z9_{MD/min}$; $Z4_{MD/max}$ et $Z4_{MD/min}$) optimisées. La figure 13a illustre les différentes aberrations pour la focale max et la figure 13b pour la focale min.

La figure 14 décrit la variation du focus moyen $<Z4>$ du télescope à 3 Miroirs sans miroir déformable en fonction de la valeur de la conique de M3.

La figure 15 illustre l'évolution des principales aberrations en fonction de la valeur de la conicité de M2, pour les focales min et max.

La figure 16 illustre l'évolution des principales aberrations en fonction de la valeur de la conicité de M1 pour les focales min et max.

La figure 17 illustre les différentes aberrations dans le plan focal d'un télescope selon l'invention, le télescope présentant de nouvelles conicités c'1, c'2 et c'3 respectivement des miroirs M1, M2 et M3, et pour le miroir déformable MD, une positon médiane Pm et des valeurs de $Z9_{MD}$, de $Z4_{MD}$ et de $Z16_{MD}$ optimisées. La figure 17a illustre les différentes aberrations pour la focale max et la figure 17b pour la focale min.

La figure 18 illustre le procédé de détermination de paramètres d'un télescope anastigmat selon l'invention

La figure 19 illustre l'évolution de la WFE moyennées sur les différentes focales, après chaque étape du procédé.

## DESCRIPTION DETAILLEE DE L'INVENTION

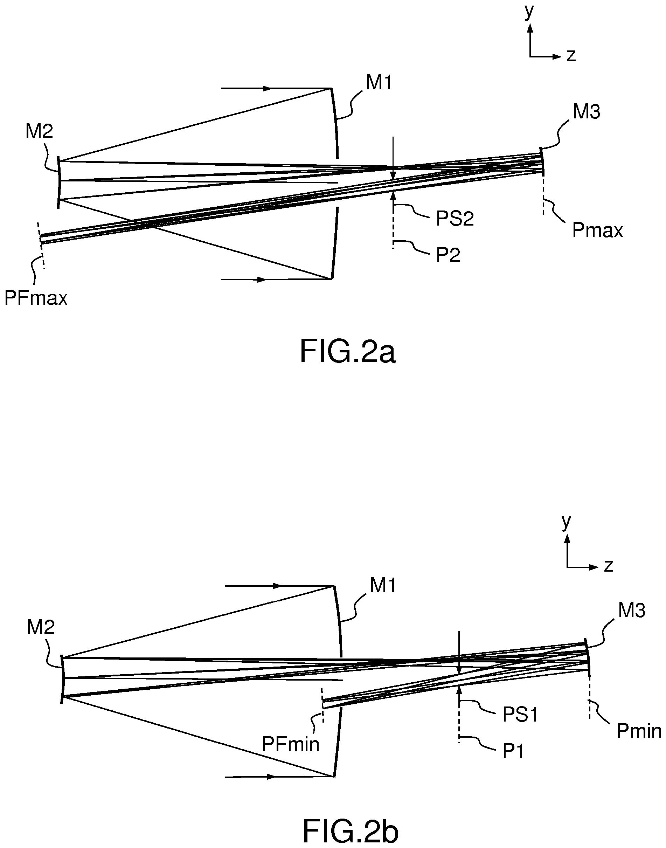

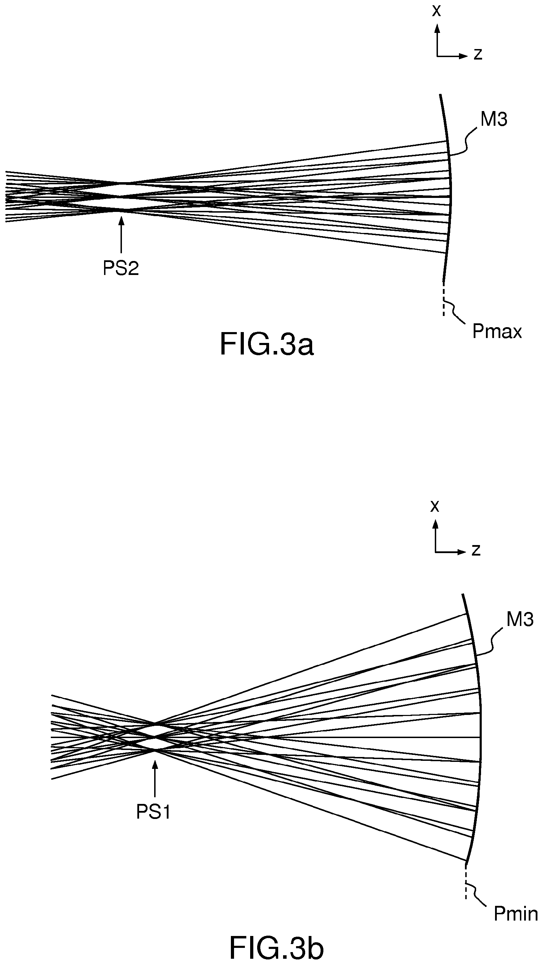

Nous allons tout d'abord décrire un télescope de type Korsh rendu à focale variable. Les figures 2 et 3 décrivent un télescope 20 de type Korsh à 3 miroirs multifocal ou présentant une fonction zoom, la focale étant rendue variable par déplacement du troisième miroir M3 sur l'axe optique du télescope O à l'aide de moyens 5 de déplacement linéaire. Le document US 4993818 décrit sommairement le principe d'un tel système.

Le déplacement du miroir M3 entre deux positions extrêmes Pmin et Pmax permet de réaliser une focale variable entre respectivement une focale minimale fmin et une focale maximale fmax. On entend par zoom un instrument qui comprend au moins deux focales fmin et fmax, et qui est susceptible de fonctionner pour des focales intermédiaires par déplacement du miroir M3.

Selon une variante le télescope comprend uniquement deux focales, fmin et fmax, il est alors dénommé bifocal.

La figure 2 illustre le télescope vu de côté dans un plan YZ, la figure 2a illustre le télescope fonctionnant avec la focale maximale et la figure 2b avec la focale minimale. La figure 3 illustre le télescope vu de côté dans un plan XZ, la figure 3a illustre le télescope fonctionnant avec la focale maximale et la figure 3b avec la focale minimale.

Pour M3 à une des positons extrêmes Pmin, le télescope présente la focale minimum fmin, une première pupille de sortie PS1 à une première position P1 et un plan focal PFmin (figures 2b, 3b). Pour M3 à l'autre position extrême Pmax, le télescope présente la focale maximum fmax, une deuxième pupille de sortie PS2 à une deuxième position P2 et un plan focal Pmax (figures 2a, 3a).

La positon du plan focal du télescope variant avec la focale, il convient d'intégrer des moyens de variation du chemin optique entre le troisième miroir M3 et le détecteur D configurés de sorte que le détecteur reste positionné dans le plan focal du télescope. Ces moyens sont décrits ci dessous pour le cas d'un télescope multifocal 20 standard, et seront appliqués plus loin à un télescope selon l'invention.

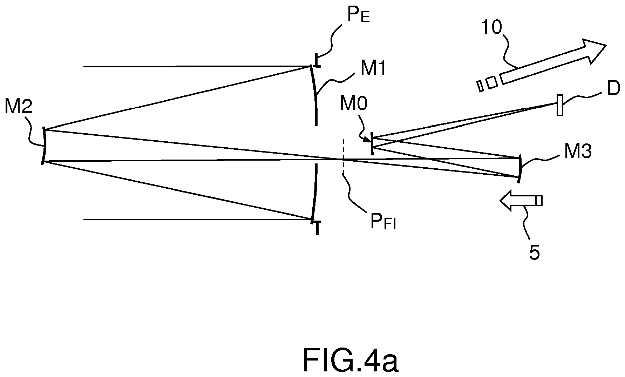

Selon une première variante les moyens de variation du chemin optique entre le troisième miroir M3 et le détecteur D comportent des moyens de translation 10 du détecteur D selon l'axe optique O et selon l'axe Y défini figure 2a, 2a), tels qu'illustré figure 4a.

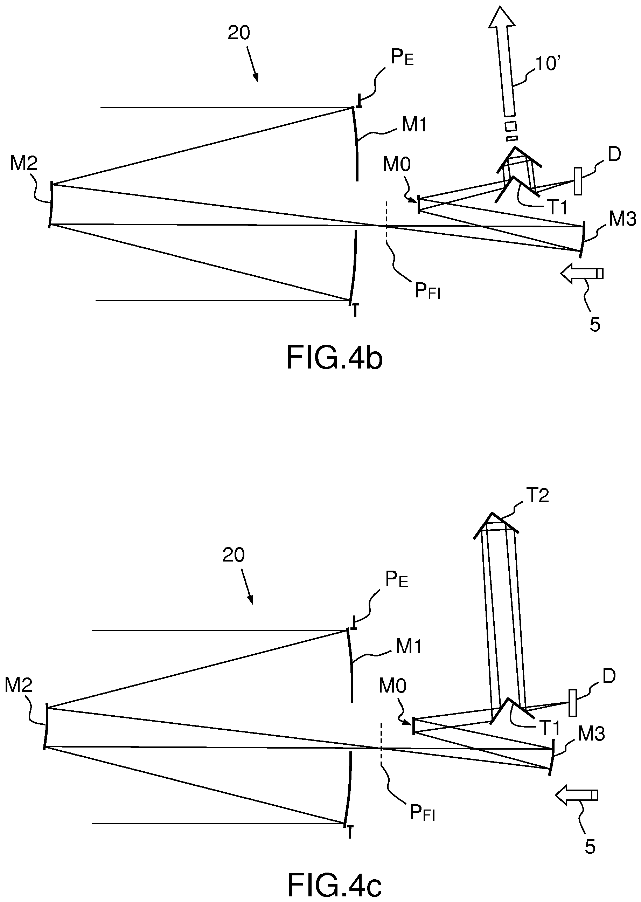

Selon une deuxième variante illustrée figures 4b et 4c le détecteur D est fixe et les moyens de variation du chemin optique comprennent deux miroirs T1, T2 en forme de toit (c'est-à-dire présentant deux faces à environ 90° l'une de l'autre) situés entre le troisième miroir M3 et le détecteur D, et des moyens 10' de translation linéaire d'un des deux miroirs en forme de toit, T2 sur l'exemple, l'autre restant fixe, selon un axe non parallèle à l'axe optique, de manière à faire varier le chemin optique. Les pentes de T1 de préférence à 45° ne sont pas nécessairement parallèles à celles de T2. La figure 4b illustre une première positon du miroir en toit T2 correspondant à une première positon du miroir M3 (focale courte), et la figure 4c illustre une deuxième position du miroir en toit T2 correspondant à une deuxième positon du miroir M3 (focale plus longue). Un miroir plan M0 permet de replier le faisceau pour une meilleure lisibilité du système optique global.

Afin de bien comprendre le cheminement qui a conduit à l'invention, nous allons dans un premier temps décrire la manière de calculer un télescope de type Korsch à zoom. On détermine des paramètres dénommés paramètres initiaux des premier, deuxième et troisième miroirs compatibles à la fois avec la focale minimale fmin et la focale maximale fmax, avec un logiciel optique d'optimisation connu de l'état de la technique.
Ainsi à l'aide des équations de Korsch, on détermine les rayons de courbures et des coniques initiales pour les deux focales extrêmes de notre zoom.

Par exemple, il est possible de répondre aux équations de Korsch simultanément pour les deux focales fmin et fmax en ayant un rayon de courbure M1 identiques pour les 2 focales.
Le point de départ est donc constitué par les valeurs: R1, R2_fmax, R2_fmin, R3_fmax, R3_fmin, C1_fmax, C1_fmin, C2_fmax, C2_fmin, C3_fmax, C3_fmin.
La suite de l'optimisation consiste à contraindre les rayons de courbures et les conicités à être identiques pour les 2 focales extrêmes.
L'optimisation est réalisée de manière classique à l'aide de logiciels de calcul optique (CodeV, Zemax, Oslo,...). Ces logiciels fonctionnent sur le principe de la minimisation d'une fonction d'erreur. Typiquement la fonction d'erreur inclus la qualité image au plan focal et la contrainte des focales fmin et fmax.

Ainsi, avec une première optimisation de la qualité d'image dans le plan focal du télescope selon un critère prédéterminé, on aboutit aux paramètres initiaux :
Rayons de courbure initiaux : R1, R2, R3 pour respectivement M1, M2 et M3 Coniques initiales : C1, C2, C3 pour respectivement M1, M2 et M3

Le critère prédéterminé consiste par exemple à minimiser d'une erreur de forme d'onde ou WFE pour Wave Front Error en anglais, moyennée sur une pluralité de points du champ, bien connu de l'homme de l'art, typiquement on cherche à minimiser la valeur quadratique moyenne ou WFE RMS.

Dans ce type de solution les formes des miroirs M1, M2 et M3, définies par les paramètres rayon de courbure et constante de conicité, répondent aux équations établies par M. Korsch afin d'obtenir une solution aplanétique et anastigmate, sans courbure de champ. Cependant ces équations ne peuvent pas être rigoureusement résolues simultanément les deux focales extrêmes fmin et fmax.
Il s'agit d'un compromis et la qualité image s'en ressent. La qualité image reste acceptable pour des télescopes peu contraints en volume (c'est-à-dire pour lesquels les rayons sont incidents sur les miroirs avec des angles faibles). Dans le domaine spatial, la contrainte de volume est primordiale. Cette solution n'est donc pas envisageable pour des instruments spatiaux de focale et de taille de pupille importantes dans lesquels les rayons sont incidents sur les miroirs avec des angles élevés.

Un exemple illustratif est un télescope bifocal avec :

Focale max = 37.5 m
Focale min : 15 m
Ratio du zoom : 2.5
Diamètre du miroir M1 : 1.1 m
Distance entre M1 et M2 : 1600 mm
Distances entre les deux positons extrêmes de M3 : 250 mm
Distances entre PS1 et PS2 : 250 mm
Distance entre PFmax et PFmin : 1600 mm (PF : plan focal).

L'étape de détermination des paramètres initiaux par une première optimisation telle que décrite ci-dessus aboutit à une configuration initiale du télescope aux valeurs suivantes :

R1 = 4000 mm C1 = -1
R2 = 1000 mm C2 =-2.1
R3 = 1200 mm C3 = -0.61

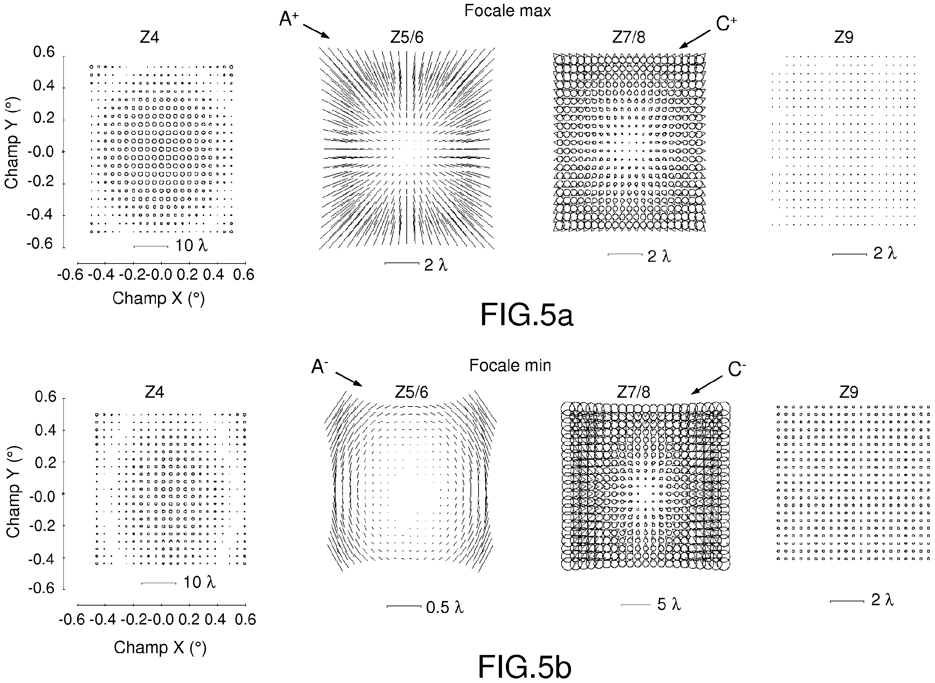

La figure 5 illustre les aberrations présentes dans le plan focal (positon du détecteur) pour le télescope bifocal dont les trois miroirs asphériques M1, M2 et M3 ont les paramètres initiaux obtenus en résolvant les équations de Korsch tel qu'expliqué ci-dessus.

La figure 5a illustre les aberrations pour la focale maximale fmax, et la figure 5b pour la focale minimale fmin.

Pour rappel le focus correspond à Z4, l'astigmatisme à Z5 et Z6 (Z5/6), la coma à Z7 et Z8 (Z7/8) et l'aberration sphérique à Z9.

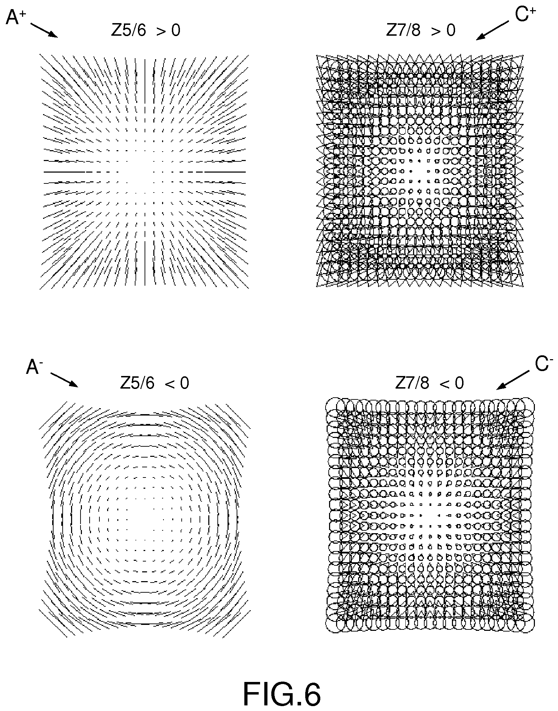

Afin de caractériser plus précisément les différentes catégories d'aberrations étudiées nous adopterons une convention de signe illustrée figure 6.

Nous dénommerons :

- astigmatisme « radial »: astigmatisme pour lequel le foyer tangentiel se situe avant le foyer sagittal. Dans la suite cet astigmatisme sera considéré par convention comme positif et noté $A^+$;
- astigmatisme « tangentiel »: astigmatisme pour lequel le foyer sagittal se situe avant le foyer tangentiel. Dans la suite cet astigmatisme sera considéré par convention comme négatif et noté $A^-$.
- coma « externe »: coma pour laquelle la forme de la tache image d'un point source est une « comète » dont la queue (partie la plus large) s'éloigne de l'axe optique. Il s'agit de la coma créée par une lentille bifocale. Dans la suite cette coma sera considéré par convention comme positive, et noté $C^+$ ;
- coma « interne »: coma pour laquelle la forme de la tache image d'un point source est une « comète » dont la queue est dirigée vers l'axe optique. Dans la suite cette coma sera considéré par convention comme négative et noté $C^-$

On constate sur la figure 5 que ces aberrations, à l'exception de l'aberration sphérique Z9, sont variables dans le champ (X, Y) du télescope. Les aberrations dominantes pour cette configuration initiale du télescope sont : Aberrations dominantes initiales pour la focale maximale (figure 5a): Astigmatisme (Z5/6) >0 noté $A^+$ , et Coma (Z7/8) >0 noté $C^+$ Aberrations dominantes initiales pour a focale minimale (figure 5b): Astigmatisme (Z5/6) <0 noté $A^-$ et Coma (Z7/8) <noté $C^-$

Le télescope en l'état ne peut être utilisé du fait des aberrations trop importantes.

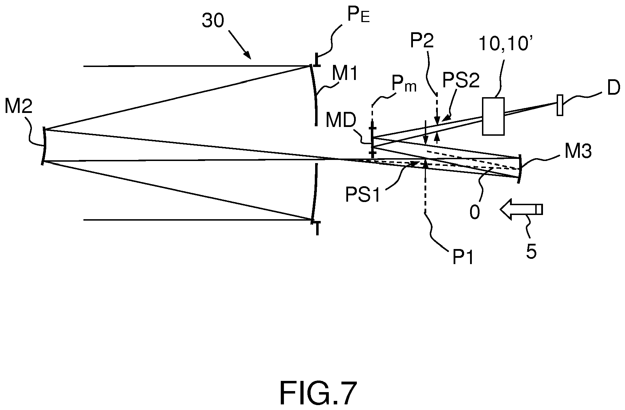

Le télescope de type Korsh 30 selon l'invention, illustré figure 7, est un télescope 20 tel qu'illustré figures 2 à 4 et qui comprend en outre un miroir déformable MD tel que décrit précédemment. Un télescope de ce type est utilisable dans un environnement spatial, mais aussi au sol pour effectuer de l'observation ou de la surveillance.

Pour limiter la taille du miroir déformable MD celui-ci est disposé à une position médiane Pm fixe située entre la première position P1 de la pupille de sortie PS1 (focale minimale) et la deuxième position P2 de la pupille de sortie PS2 (focale maximale).

Les moyens de variation du chemin optique configurés de sorte que le détecteur reste positionné dans le plan focal du télescope, tels que décrits précédemment (par exemple 10 et 10') sont alors disposés entre le miroir déformable MD et le détecteur D, tel qu'illustré figure 7.

Dans le cas d'un télescope 30 selon l'invention, la pupille de sortie n'est pas fixe suivant la focale du zoom. La pupille de sortie se déplace (ordre de grandeur ~200mm) suivant la focale choisie : le miroir déformable MD ne peut donc pas être utilisé en pupille de sortie pour toutes les focales, et sa position relative à la pupille de sortie effective varie en fonction de la focale choisie. Cela a un impact très important : vu les ordres de grandeurs de déplacement de la pupille de sortie, le miroir déformable va travailler dans le champ : l'impact des aberrations appliquées par déformation de la surface du miroir MD pour tenter de compenser les aberrations du système telles qu'illustrées figure 5, n'est plus constant dans le champ. Et donc les aberrations appliquées sur le miroir déformable vont créer de nouvelles aberrations dans le système. Par exemple comme expliqué plus bas, l'introduction d'aberration sphérique sur le miroir déformable, qui est éloigné de la pupille de sortie, introduit dans le télescope de l'astigmatisme et de la coma dans des proportions beaucoup plus importantes que de l'aberration sphérique.

Etudions à présent quelles sont les aberrations susceptibles d'être corrigées par un miroir déformable placé dans la zone interpupille.

Pour la suite il convient de ne pas confondre les aberrations du télescope, correspondant aux défauts du télescope en tant que système optique, et les aberrations introduites dans la forme du miroir déformable, notées avec l'indice MD.

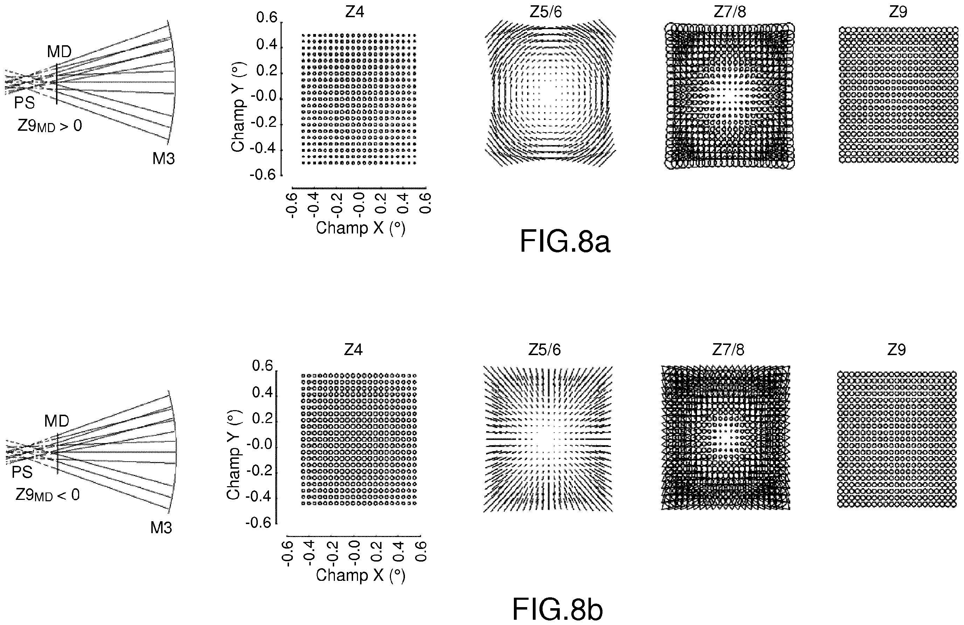

La figure 8 illustre, pour le système initial, les aberrations résultantes suite à l'introduction d'aberration sphérique sur miroir déformable $Z9_{MD}$ ($Z9_{MD}$>0 pour la figure 8a et $Z9_{MD}$<0 pour la figure 8b), en fonction de sa position relative par rapport à la pupille de sortie effective PS, lorsqu'il est situé en aval de PS par rapport au miroir M3.

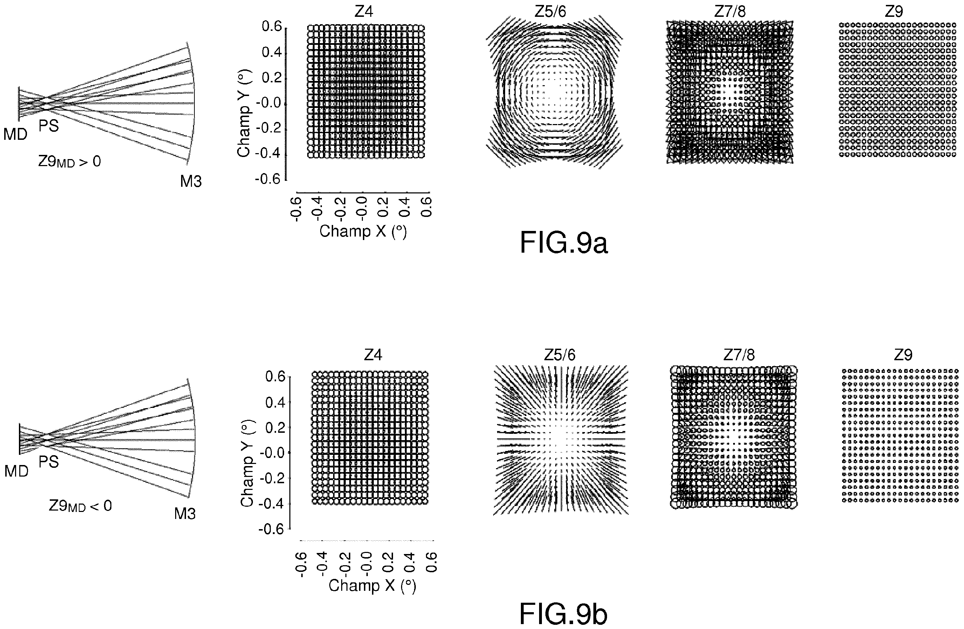

La figure 9 illustre, pour le système initial, les aberrations résultantes suite à l'introduction d'aberration sphérique $Z9_{MD}$ sur miroir déformable, avec $Z9_{MD}$>0 pour la figure 9a et $Z9_{MD}$<0 pour la figure 9b, en fonction de sa position relative par rapport à la pupille de sortie effective PS, lorsqu'il est situé en amont de PS par rapport au miroir M3.

Le miroir MD étant disposé entre P1 et P2, il est situé selon la figure 8 pour la focale max (en aval de PS2 par rapport à M3) et selon la figure 9 pour la focale min (en amont de PS1 par rapport à M3).

On voit sur les figures 8 et 9 que l'introduction d'aberration sphérique $Z9_{MD}$ sur le miroir déformable MD introduit des aberrations telles que astigmatisme et coma dans le télescope. Ce qui signifie que le miroir déformable MD peut compenser les aberrations inverses de celles créées par $Z9_{MD}$.

On déduit de la figure 8 que pour la focale max fmax :

- introduire du $Z9_{MD}$ >0 crée de l'astigmatisme <0 et de la coma <0, ce qui permet de corriger de l'astigmatisme >0 et de la coma >0
- introduire du $Z9_{MD}$ <0 crée de l'astigmatisme >0 et de la coma >0, ce qui permet de corriger de l'astigmatisme <0 et de la coma <0

On déduit de la figure 9 que pour la focale min fmin :

- introduire du $Z9_{MD}$ >0 crée de l'astigmatisme <0 et de la coma >0, ce qui permet de corriger de l'astigmatisme >0 et de la coma <0
- introduire du $Z9_{MD}$ <0 crée de l'astigmatisme >0 et de la coma <0 ce qui permet de corriger de l'astigmatisme <0 et de la coma >0

Ainsi, en plaçant le miroir déformable MD entre P1 et P2, du $Z9_{MD}$ d'un signe donné permet de corriger simultanément pour les deux focales extrêmes, de l'astigmatisme d'un même signe donné et de la coma de signe opposé. Par exemple $Z9_{MD}$ >0 permet de corriger de l'A+ et du C+ pour fmax et de l'A+ et du C- pour fmin.
Cette capacité de correction n'est pas compatible du système initial dont les aberrations à corriger sont illustrées figure 5. Ainsi en appliquant au télescope bifocal une méthode classique d'optimisation de ses paramètres à l'aide des équations de Korsch (configuration initiale du télescope 3 miroirs) et en tentant de compenser des aberrations à l'aide d'un miroir déformable, on arrive à une impasse : MD placé dans la zone interpupille ne peut corriger simultanément l'astigmatisme et la coma présentes dans le système fonctionnant à la focale minimale et à la focale maximale

Après de nombreux calculs les inventeurs ont identifié une manière de réaliser un télescope de type Korsch à zoom présentant une très bonne qualité d'image.
Dans le télescope 30 selon l'invention, le troisième miroir M3 présente une nouvelle conicité c'3 déterminée à partir de la conicité initiale c3 (calculée à partir des équation de Korsch lors de la première optimisation tel qu'expliqué ci-dessus).

La nouvelle conicité c'3 est déterminée de sorte que le télescope anastigmat à trois miroirs asphériques présente, sans la présence du MD, et pour les focales minimale et maximale, des aberrations compensables par le MD.

Compte tenu de l'enseignement des figures 8 et 9, on cherche à obtenir une configuration du télescope M1/M2/M3 (sans MD) présentant :
Pour la focale maximale : astigmatisme positif A+ et coma positive C+
Pour la focale minimale : astigamtisme positif A+ et coma négative C-
Sur la figure 5 on voit que l'astigmatisme pour la focale minimale est négative. La nouvelle conicité c'3 est donc déterminée de manière à modifier le signe de l'astigmatisme de télescope sans la présence du miroir déformable, pour la focale minimale, soit transformer l'astigmatisme négatif du système en un astigmatisme positif pour la focale minimale..

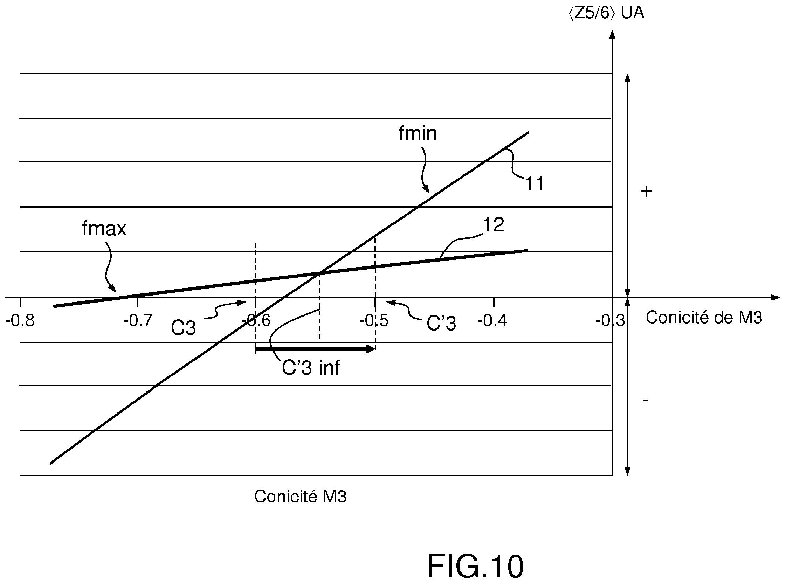

La figure 10 décrit l'évolution de la valeur moyenne de l'astigmatisme du télescope à 3 miroirs (sans le MD) <Z5/6> selon une unité arbitraire, pour la focale min (courbe 11) et la focale max (courbe 12), en fonction de la valeur de conicité du M3. On retrouve pour la conicité initiale c3= -0.61 un astigmatisme positif pour fmax et négatif pour fmin.
Cette figure met en évidence l'existence d'une valeur de c'3inf pour laquelle le signe de l'astigmatisme pour la focale min s'inverse, ici -0.56. Pour une nouvelle conicité c'3 supérieure ou égale à c'3inf ,l'astigmatisme de la focale min change de signe.La nouvelle valeur de c'3 ne peut en outre pas trop s'éloigner de la valeur initiale c3 afin de maintenir la convergence du système optique.

Une deuxième optimisation de la qualité d'image, à partir de la valeur c'3inf est alors effectuée, afin de déterminer la nouvelle conicité c'3, la position médiane Pm de MD, ainsi que les formes de sa surface, Smin pour fmin et Smax pour fmax permettant d'obtenir la meilleure qualité d'image selon le critère prédéterminé.
Avec la connaissance a priori des aberrations susceptibles d'être compensées par le miroir, tel qu'illustré figures 8 et 9, on sait que la forme de la surface S du miroir déformable MD apte à compenser les aberrations du système optique comprenant M1, M2, et M3 de conicité c'3, doit comprendre un premier type d'aberration, ici dans l'exemple de l'aberration sphérique du premier ordre $Z9_{MD}$, et plus particulièrement du $Z9_{MD}$ positif.

Ainsi la valeur exacte de ma nouvelle conicité c'3, la position médiane fixe Pm du miroir déformable, commune aux deux focales, et les formes de la surface de MD, Smin pour fmin et Smax pour fmax, sont déterminées par une deuxième optimisation des trajets optiques dans l'instrument, de manière à corriger les aberrations du télescope 3 miroirs présentant une nouvelle conicité c'3 et à optimiser la qualité d'image dans le plan focal du télescope selon le critère prédéterminé, typiquement la minimisation d'une erreur de front d'onde WFE.

La modification de la conicité de M3 permet d'inverser le signe de l'astigmatisme de la focale min, et ainsi d'introduire dans le système optique des aberrations telles que les aberrations résultantes du système optique sont compensables par un MD à une position fixe dans la zone interpupille. Préférentiellement, les aberrations introduites par c'3 (sans MD) sont l'astigmatisme et la coma.

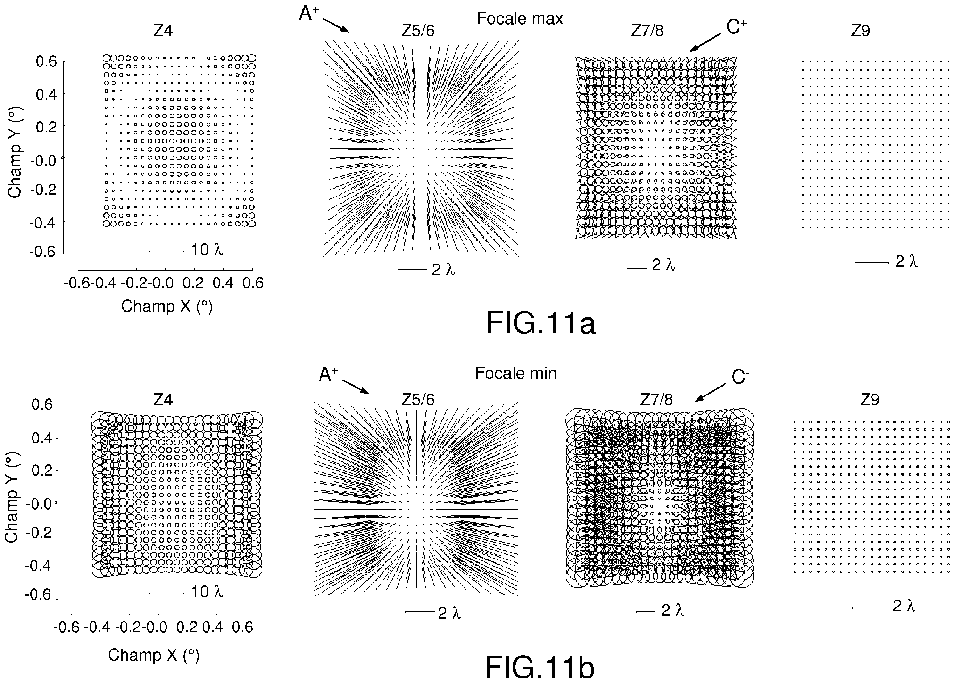

La figure 11 illustre les différentes aberrations présentes dans le plan focal du télescope à 3 miroirs dont le M3 présente la conicité c'3 = -0.52

La nouvelle valeur c'3 de la conique de M3 permet d'obtenir de l'astigmatisme positif pour toutes les focales et des comas opposées pour les focales extrêmes.

Dans l'exemple la nouvelle conicité c'3 s'écarte d'environ 20% de la valeur de la conique initiale c3. Préférentiellement la nouvelle conicité c'3 s'écarte de la conicité initiale c3 de plus de 5% et de moins de 30 % .

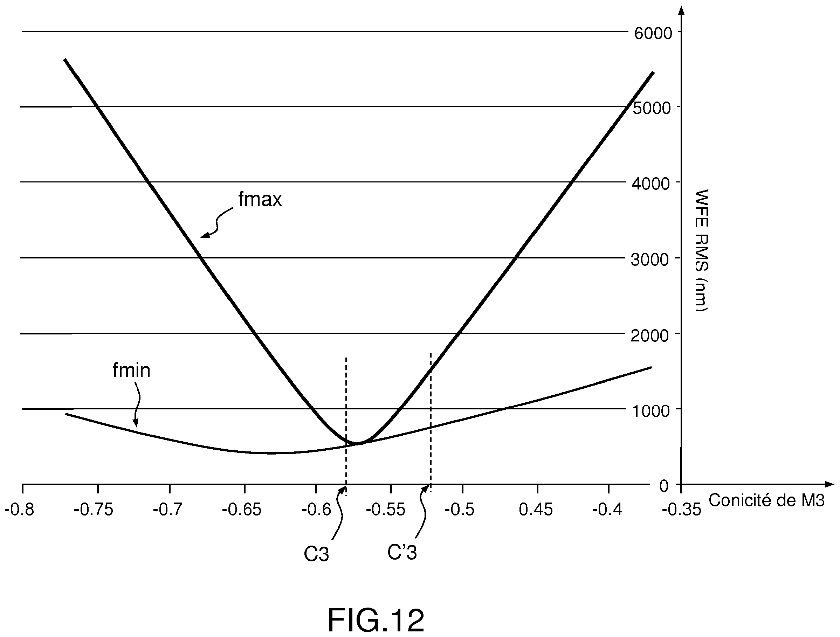

La figure 12 illustre l'évolution de la valeur quadratique moyenne de l'erreur de forme d'onde WFE RMS en fonction de la valeur de conicité du M3, pour les focales min (courbe 15) et max (courbe 16). On constate que la conicité initiale c3 correspondait à la valeur optimisée de qualité d'image, une nouvelle valeur de conicité c'3 supérieure à -0.56 entrainant une augmentation de la WFE, c'est-à-dire une diminution de la qualité d'image. Le changement de valeur de la conique de M3 ne répond pas à un besoin de qualité d'image, mais permet d'obtenir des aberrations compensables par le MD. On s'éloigne de l'optimum de qualité d'image dans le but de permettre la correction des aberrations.

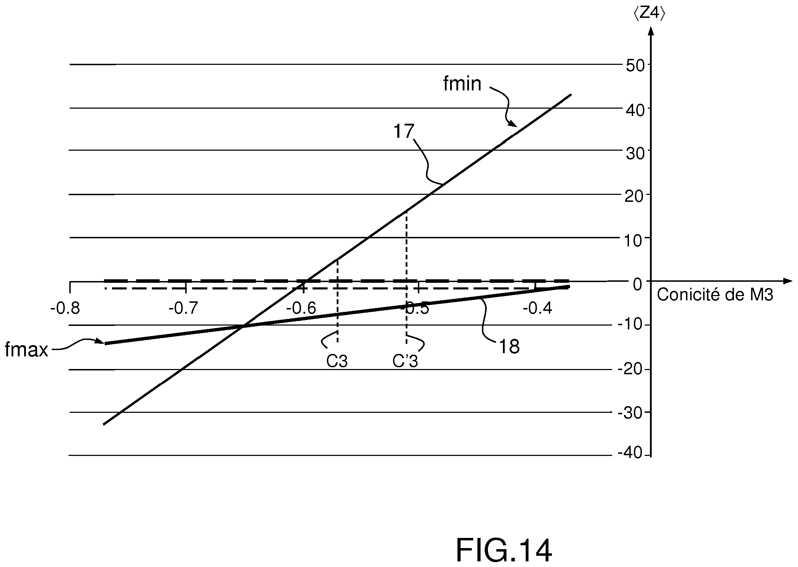

L'introduction d'aberration sphérique $Z9_{MD}$ au niveau du miroir déformable permet de réduire fortement le Z7/8 (coma) et Z5/6 (astigmatisme) du système, mais ne réduit pas le focus Z4. Au contraire, $Z9_{MD}$ va également entraîner une augmentation du Z4 du télescope comme illustré figure 14, qui décrit la variation du focus moyen <Z4> du système (télescope 3 Miroirs sans MD) en fonction de la valeur de la conique de M3, pour la focale min (courbe 17) et la focale max (courbe 18) : on constate que le focus Z4 augmente sensiblement, particulièrement pour la focale min.

Il convient donc d'introduire un deuxième type d'aberration dans la forme de la surface du MD, pour compenser le focus présent dans le système.

Dans l'exemple on introduit du focus $Z4_{MD}$ pour compenser le Z4 du système (celui initialement présent et celui introduit par $Z9_{MD}$ (première aberration). L'introduction de $Z4_{MD}$ permet également d'équilibrer les valeurs d'astigmatisme et de coma, c'est-à-dire de rendre proches les valeurs des coefficients respectifs, ce qui permet d'améliorer la compensation par le $Z9_{MD}$.

A partir de la plage identifiée pour c'3, la détermination de la valeur finale de c'3, de la valeur Pm, du $Z9_{MD}$ et du $Z4_{MD}$ pour Smax (surface du MD pour fmax) et pour Smin (surface du MD pour fmin), s'effectue par une deuxième optimisation.

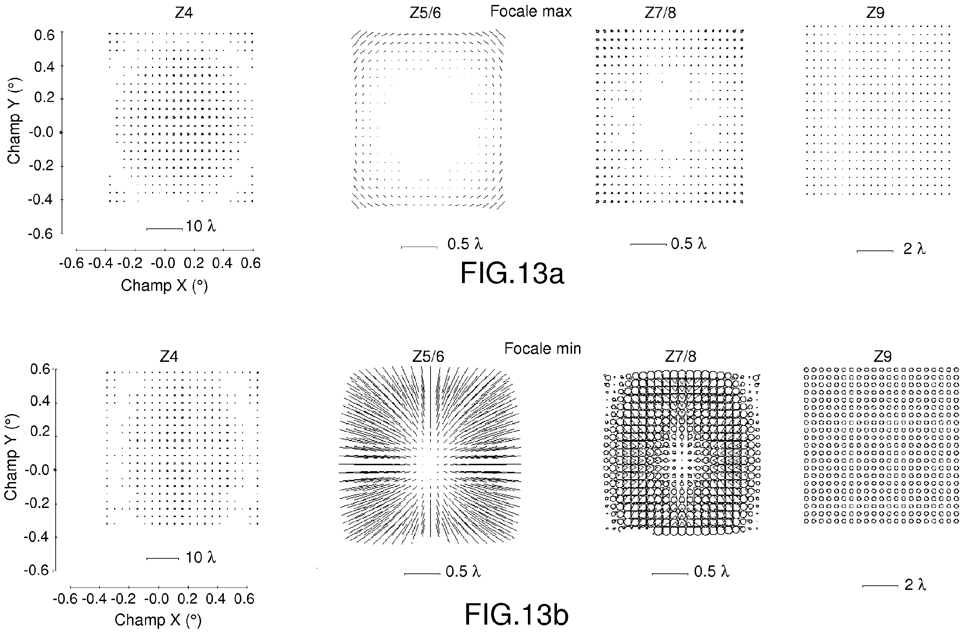

La figure 13 illustre les différentes aberrations dans le plan focal d'un télescope 30 selon l'invention, le télescope présentant une nouvelle conicité c'3 du miroir M3, et pour le miroir déformable, une positon médiane Pm et des valeurs de $Z9_{MD}$ et de $Z4_{MD}$ ($Z9_{MD/max}$ et $Z9_{MD/min}$; $Z4_{MD/max}$ et $Z4_{MD/min}$) optimisées. La figure 13a illustre les différentes aberrations pour la focale max et la figure 13b pour la focale min.

La forme de la surface pour la focale max Smax comprend donc du $Z9_{MD/max}$ et du $Z4_{MD/max}$ . La forme de la surface pour la focale min Smin comprend du $Z9_{MD/min}$ et du $Z4_{MD/min}$.

Dans l'exemple c'3 = -0.52, le miroir déformable MD est positionné à 110 mm après la PS1 et à 140mm avant la PS2.

On constate en comparant cette figure 13 avec la figure 5 (voir le changement d'échelle), que la qualité du télescope est grandement améliorée.

Selon un mode de réalisation, pour améliorer encore la qualité d'image, on modifie légèrement la conicité des miroirs M2 et M1 du télescope 30 selon l'invention.

Dans l'exemple, la performance du télescope peut encore être améliorée, le Z7/8 et le Z9 étant compensé uniquement par le $Z9_{MD}$.

Modifier la conicité de M2 (nouvelle valeur c'2) permet justement de jouer sur ces deux aberrations. Cependant cette nouvelle conicité c'2 apporte également du Z4 en quantité importante. Cet excès de Z4 est contrebalancé par la modification de la conicité du M1 (nouvelle valeur c'1), qui joue également sur le Z9.

Ainsi une nouvelle conicité du premier miroir c'1 et une nouvelle conicité du deuxième miroir c'2 sont déterminées à partir respectivement d'une première conicité initiale c1 du premier miroir et d'une deuxième conicité initiale c2 du deuxième miroir, de manière à améliorer encore la qualité d'image du télescope selon le critère prédéterminé.

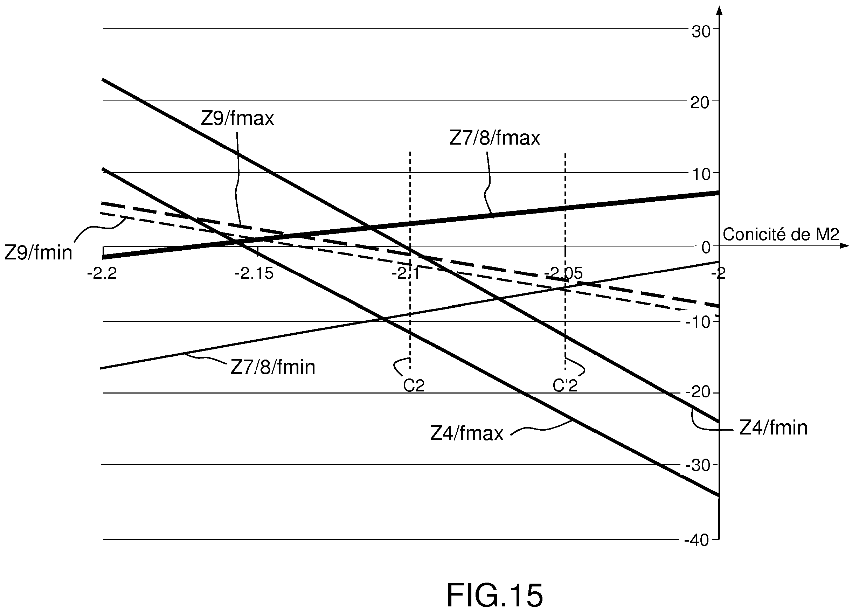

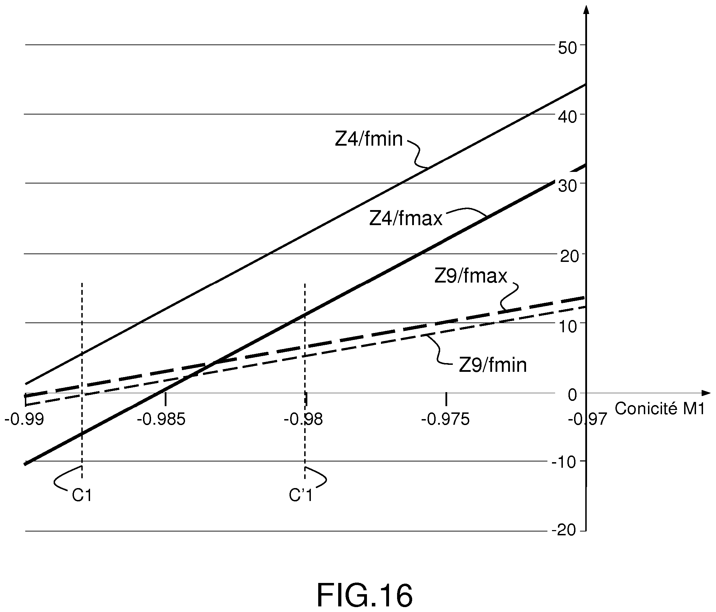

Pour l'exemple, ces modifications sont illustrées figures 15 et 16.

La figure 15 illustre l'évolution des principales aberrations en fonction de la valeur de la conicité de M2, pour les focales min et max, et la figure 16 l'évolution des principales aberrations en fonction de la valeur de la conicité de M1.

Par une troisième optimisation on détermine les nouvelles valeurs de conicité c'2 et c'1, illustrées figures 15 et 16 :

C'1 =-0.98
C'2 = -2.1

En les comparant aux valeurs initiales c1 = -1 et c2 = -2, on constate que ces variation de conicité sont faibles (moins de 10%, voir moins de 5% pour c1), mais permettent néanmoins d'améliorer encore la qualité d'image.

En variante, on ajoute également un troisième type d'aberration, ici du $Z16_{MD}$ soit de l'aberration sphérique du deuxième ordre, qui influence Z16, Z9, Z4 Z5/6 et Z7/8 et permet d'augmenter encore la qualité d'image.

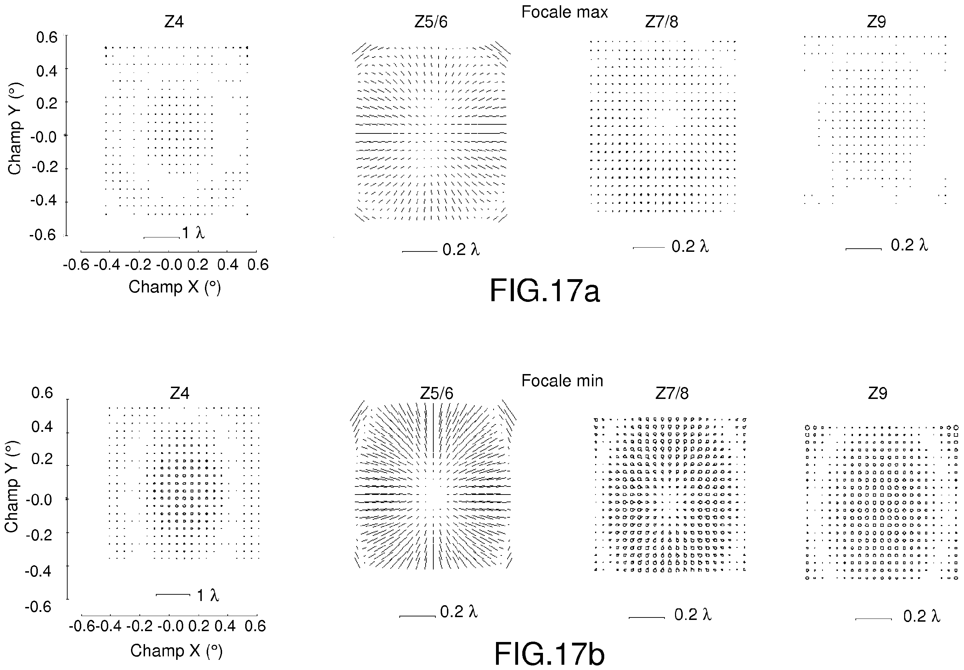

La figure 17 illustre les différentes aberrations dans le plan focal d'un télescope 30 selon l'invention, le télescope présentant de nouvelles conicités c'1, c'2 et c'3 respectivement des miroirs M1, M2 et M3, et pour le miroir déformable MD, une positon médiane Pm et des valeurs de $Z9_{MD}$, de $Z4_{MD}$ et de $Z16_{MD}$ optimisées. La figure 17a illustre les différentes aberrations pour la focale max et la figure 17b pour la focale min.

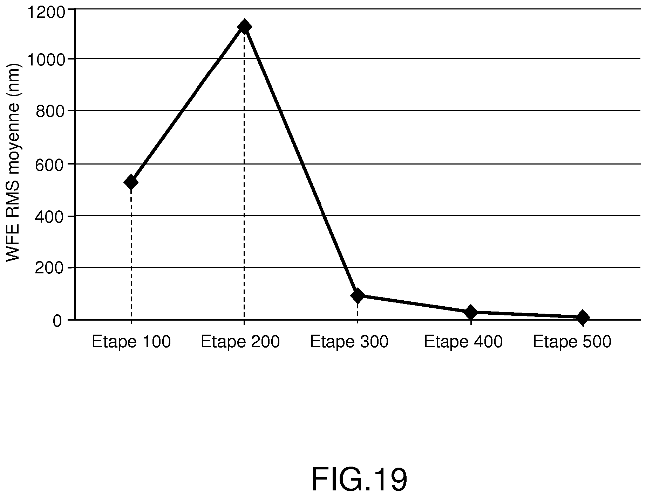

On constate en comparant cette figure 17 avec la figure 13 (voir changement d'échelle), que la qualité du télescope est encore améliorée. La qualité d'image finale obtenue est compatible avec la contrainte d'une WFE RMS $<\lambda/15$, qui pour le visible correspond à une WFE RMS < 50 nm. (voir plus loin figure 19).

Contrairement à ce qui est pratiqué classiquement, dans le télescope 30 selon l'invention le miroir MD fait partie intégrante de la combinaison optique de l'instrument.

Pour un fonctionnement en zoom, le télescope 30 selon l'invention présente une pluralité de focales intermédiaires fi, indice entier. La forme de la surface du miroir déformable Sfi associée à chaque focale intermédiaire fi est calculée à partir de la forme de la surface pour les valeurs de focale minimale Smin et maximale Smax, afin d'appliquer à MD la correction adéquate.

Pour l'exemple, une fois les aberrations $Z9_{MD}$, de $Z4_{MD}$ et de $Z16_{MD}$ optimisées pour fmin et fmax, c'est-à-dire des valeurs de coefficients des polynômes de Fringe Zernike déterminés pour fmin et fmax, on calcule les valeurs des coefficients de polynômes pour chaque valeur de focale, à partir des valeurs de coefficients des polynômes de Fringe Zernike déterminés pour fmin et fmax.

Selon une variante, le télescope selon l'invention comporte un diaphragme d'ouverture placé dans la zone interpupille et réglable en ouverture pour garder une ouverture numérique sensiblement constante lorsque la focale varie.

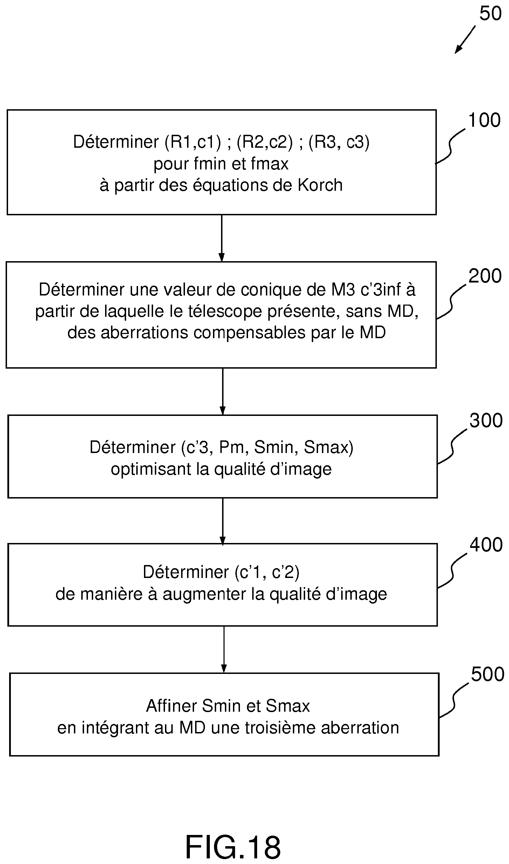

Selon un autre aspect, l'invention concerne un procédé 50 de détermination de paramètres d'un télescope anastigmat illustré figure 18 et comprenant :

- trois miroirs asphériques, un premier miroir M1 concave, un second miroir M2 convexe, un troisième miroir M3 concave,
- un détecteur D,
- un miroir déformable et pilotable MD et,
- des moyens 5 de déplacement linéaire du troisième miroir sur l'axe optique O du télescope de manière à faire varier la focale du télescope entre une focale minimale fmin et une focale maximale fmax.

Les trois miroirs M1, M2 et M3 sont agencés de sorte que le premier miroir et le second miroir forment d'un objet à l'infini une image intermédiaire située entre le second miroir et le troisième miroir, le troisième miroir formant de cette image intermédiaire une image finale dans le plan focal du télescope dans lequel est placé le détecteur D.

Les premier, deuxième et troisième miroirs sont de forme fixe caractérisée par une conique et un rayon de courbure.

En outre le télescope à la focale minimale présente une première pupille de sortie PS1 à une première position P1, et le télescope à la focale maximale présente une deuxième pupille de sortie PS2 à une deuxième position P2. Le miroir déformable MD présente une surface déformable et est disposé à une position médiane Pm fixe située entre la première et la deuxième position.

Le procédé 50 comprend une première étape 100 qui détermine des valeurs de coniques et des rayons de courbure, dénommés valeurs initiales, des premier, deuxième et troisième miroirs du télescope :
M1 (c1, R1) ; M2 (c2, R2), M3 (c3, R3).

Ces valeurs initiales sont compatibles de la focale minimale fmin et de la focale maximale fmax, sans la présence du miroir déformable MD, sont déterminées à partir des équations de Korsh, par une première optimisation de la qualité d'image dans le plan focal du télescope selon un critère prédéterminé.

Suivant une deuxième étape 200 on détermine une valeur de conicité du troisième miroir c'3inf, à partir de la conicité initiale c3 du troisième miroir, à partir de laquelle le télescope présente, sans la présence du miroir déformable MD et pour les focales minimale et maximale, des aberrations compensables par le miroir déformable MD.

Puis dans une étape 300 on détermine une nouvelle valeur de conicité du troisième miroir c'3, la position médiane fixe Pm de MD, la forme de sa surface Smin pour la valeur de focale minimale et la forme de sa surface Smax pour la valeur de focale maximale, par une deuxième optimisation, de manière à corriger les aberrations compensables et à optimiser la qualité d'image dans le plan focal du télescope selon le critère prédéterminé. La détermination de la forme de la surface du miroir déformable est basée sur l'application d'au moins une première et une deuxième d'aberration.

Pour les focales intermédiaires le cas échéant, on calcule la forme du miroir déformable associée à chaque focale intermédiaire à partir de Smin et Smax.

Préférentiellement le procédé 50 comprend en outre une étape 400 consistant à déterminer une nouvelle conicité du premier miroir c'1 et une nouvelle conicité c'2 du deuxième miroir M2, de manière à améliorer encore la qualité d'image selon le critère prédéterminé.

Préférentiellement le procédé 50 selon comprend également une étape 500 consistant à affiner la détermination de la forme de la surface Smin du miroir déformable pour fmin et la forme de la surface Smax du miroir déformable pour fmax en intégrant une troisième aberration $Z16_{MD}$, de manière à améliorer encore la qualité d'image selon le critère prédéterminé.

De même pour les focales intermédiaires le cas échéant, on calcule la forme du miroir déformable associée à chaque focale intermédiaire et intégrant la troisième aberration, à partir de Smin et Smax.

Typiquement le critère prédéterminé consiste à minimiser une erreur de forme d'onde WFE.

La figure 19 illustre l'évolution de la WFE RMS moyennée sur les différentes focales à la fin de chaque étape du procédé, soit en fonction des différentes modifications introduites dans le système optique, pour l'exemple du télescope donné ci-dessus.

La WFE obtenue après la première optimisation basée sur les équations de Korsch est de l'ordre de 560 nm, incompatible avec la contrainte WFE RMS < 50 nm. En modifiant la valeur de conicité de M3 pour modifier le signe de l'astigmatisme, la WFE est dégradée (pas encore de miroir déformable optiquement actif : sa surface est plane). Par contre, en introduisant de l'aberration sphérique du premier ordre et du focus à la surface miroir déformable, la WFE est grandement améliorée à une centaine de nm environ. La modification des conicités de M1 et M2 permet de diminuer la WFE en dessous de la cinquantaine de nm, et l'optimisation finale, introduisant de l'aberration sphérique du deuxième ordre, permet de la diminuer encore à une dizaine de nm.

## Revendications

1. Télescope anastigmat à trois miroirs asphériques comprenant au moins un premier miroir (M1) concave, un second miroir (M2) convexe un troisième miroir (M3) concave et un détecteur (D), et présentant un axe optique (O),

    - les trois miroirs étant agencés de sorte que le premier miroir (M1) et le second miroir (M2) forment d'un objet à l'infini une image intermédiaire située entre le second miroir et le troisième miroir, le troisième miroir (M3) formant de cette image intermédiaire une image finale dans le plan focal du télescope dans lequel est placé le détecteur, les premier, deuxième et troisième miroirs étant de forme fixe **caractérisée par** au moins un rayon de courbure et une conicité,

    le télescope comprenant en outre :

    - des moyens (5) de déplacement linéaire du troisième miroir (M3) sur l'axe optique du télescope (O) de manière à faire varier la focale du télescope entre au moins une focale minimale (fmin) et une focale maximale (fmax), le télescope à la focale minimale présentant une première pupille de sortie (PS1) à une première position (P1), et le télescope à la focale maximale présentant une deuxième pupille de sortie (PS2) à une deuxième position (P2)

    **caractérisé en ce que** le télescope comprend en outre:

    - un miroir déformable (MD) et pilotable, présentant une surface déformable et disposé à une position médiane (Pm) fixe située entre la première et la deuxième position,
    - des moyens (10, 10') de variation du chemin optique entre le miroir déformable (MD) et le détecteur (D) configurés de sorte que le détecteur reste positionné dans le plan focal du télescope,
    - le troisième miroir présentant une conicité (c'3) déterminée à partir d'une conicité initiale (c3), la conicité initiale (c3) étant déterminée à partir des équation de Korsch, la conicité (c'3) étant déterminée de sorte que le télescope présente, sans la présence dudit miroir déformable et pour les focales minimale et maximale, des aberrations d'astigmatisme et de coma compensables par ledit miroir déformable (MD),
    - ladite position médiane fixe (Pm) dudit miroir déformable et la forme de sa surface respectivement pour les valeurs de focale minimale (Smin) et maximale (Smax), étant déterminées de manière à corriger lesdites aberrations compensables et à optimiser la qualité d'image dans le plan focal du télescope selon un critère prédéterminé, ladite forme de la surface du miroir déformable comprenant au moins une première et une deuxième catégorie d'aberration, la première catégorie d'aberration étant l'aberration sphérique de premier ordre ($Z9_{MD}$) et la deuxième catégorie d'aberration étant le focus ($Z4_{MD}$).

2. Télescope selon la revendication 1 dans lequel la forme de la surface du miroir déformable comprend en outre une aberration sphérique de deuxième ordre ($Z16_{MD}$) pour améliorer encore la qualité d'image selon ledit critère.

**3.** Télescope selon l'une des revendications précédentes dans lequel la conicité (c'3) s'écarte de la conicité initiale de plus de 5% et de moins de 30 %

**4.** Télescope selon .l'une des revendications précédentes dans lequel une conicité du premier miroir (c'1) et une conicité du deuxième miroir (c'2) sont déterminées à partir respectivement d'une conicité initiale du premier miroir (c1) et d'une conicité initiale du deuxième miroir (c2),
les conicités initiales étant déterminées à partir des équation de Korsch,
les conicités étant déterminées de manière à améliorer encore la qualité d'image dudit télescope selon ledit critère.

**5.** Télescope anastigmat selon l'une des revendications précédentes, **caractérisé en ce que** la surface du miroir déformable est définie à partir de coefficients de polynômes.

**6.** Télescope selon l'une des revendications précédentes dans lequel on définit :

- un astigmatisme positif (A+) comme un astigmatisme pour lequel un foyer tangentiel se situe avant un foyer sagittal,
- un astigmatisme négatif (A-) comme un astigmatisme pour lequel un foyer sagittal se situe avant un foyer tangentiel,
- une coma positive comme une coma pour laquelle une forme de la tache image d'un point source est une « comète » dont la queue s'éloigne de l'axe optique et,
- une coma négative comme une coma pour laquelle une forme de la tache image d'un point source est une « comète » dont la queue est dirigée vers l'axe optique,
les aberrations compensables étant de l'astigmatisme positif (A+) et de la coma positive (C+) pour la focale maximale, de l'astigmatisme positif (A+) et de la coma négative (C-) pour la focale minimale.

**7.** Télescope selon l'une des revendications précédentes dans lequel on définit :

- un astigmatisme positif (A+) comme un astigmatisme pour lequel un foyer tangentiel se situe avant un foyer sagittal,
- un astigmatisme négatif (A-) comme un astigmatisme pour lequel un foyer sagittal se situe avant un foyer tangentiel,
et dans lequel la conicité du troisième miroir (c'3) est déterminée de manière à modifier le signe de l'astigmatisme du télescope pour la focale minimale, sans la présence du miroir déformable.

**8.** Télescope selon l'une des revendications précédentes pour lequel le critère prédéterminé consiste à minimiser une erreur de forme d'onde (WFE).

**9.** Télescope selon l'une des revendications précédentes, présentant une pluralité de focales intermédiaires, et pour lequel la forme de la surface du miroir déformable (Sfi) associée à chaque focale intermédiaire (fi) est calculée à partir de la forme de la surface pour les valeurs de focale minimale (Smin) et maximale (Smax).

**10.** Procédé (50) de détermination de paramètres d'un télescope anastigmat comprenant trois miroirs asphériques, un premier miroir (M1) concave, un second miroir (M2) convexe, un troisième miroir (M3) concave, un détecteur (D), un miroir déformable et pilotable (MD) et des moyens (5) de déplacement linéaire du troisième miroir sur un axe optique (O) du télescope de manière à faire varier la focale du télescope entre une focale minimale (fmin) et une focale maximale (fmax),
les trois miroirs étant agencés de sorte que le premier miroir et le second miroir forment d'un objet à l'infini une image intermédiaire située entre le second miroir et le troisième miroir, le troisième miroir formant de cette image intermédiaire une image finale dans le plan focal du télescope dans lequel est placé le détecteur, les premier, deuxième et troisième miroirs étant de forme fixe **caractérisée par** au moins une conique et un rayon de courbure, le télescope à la focale minimale présentant une première pupille de sortie (PS1) à une première position (P1), et le télescope à la focale maximale présentant une deuxième pupille de sortie (PS2) à une deuxième position (P2), le miroir déformable (MD) présentant une surface déformable et étant disposé à une position médiane (Pm) fixe située entre la première et la deuxième position,
le procédé comprenant les étapes consistant à :

- déterminer (100) des valeurs de coniques et des rayons de courbure dénommés valeurs initiales des premier (c1, R1), deuxième (c2, R2), et troisième (c3, R3) miroirs dudit télescope compatibles de la focale minimale

(fmin) et de la focale maximale (fmax), sans la présence du miroir déformable, à partir des équations de Korsh, par une première optimisation de la qualité d'image dans le plan focal du télescope selon un critère prédéterminé,
- déterminer (200) une valeur de conicité du troisième miroir (c'3inf), à partir de la conicité initiale du troisième miroir (c3), à partir de laquelle le télescope présente, sans la présence dudit miroir déformable et pour les focales minimale et maximale, des aberrations d'astigmatisme et de coma compensables par ledit miroir déformable (MD),
- déterminer (300) une nouvelle valeur de conicité du troisième miroir (c'3), ladite position médiane fixe (Pm) dudit miroir déformable et la forme de sa surface, respectivement pour les valeurs de focale minimale (Smin) et maximale (Smax), par une deuxième optimisation, de manière à corriger lesdites aberrations compensables et à optimiser la qualité d'image dans le plan focal du télescope selon le critère prédéterminé,

la détermination de la forme de la surface du miroir déformable étant basée sur au moins une première et une deuxième catégorie d'aberration, la première catégorie d'aberration étant l'aberration sphérique de premier ordre ($Z9_{MD}$) et la deuxième catégorie d'aberration étant le focus ($Z4_{MD}$).

11. Procédé selon la revendication 10 comprenant en outre une étape consistant à déterminer (400) une nouvelle conicité des premier (c'1) et deuxième (c'2) miroirs de manière à améliorer encore la qualité d'image selon le critère prédéterminé.

12. Procédé selon la revendication 11 comprenant en outre une étape (500) consistant à affiner la détermination de la forme de la surface du miroir déformable (Smin, Smax) en intégrant en outre une troisième catégorie d'aberration ($Z16_{MD}$) de manière à améliorer encore la qualité d'image selon le critère prédéterminé.

## Patentansprüche

1. Anastigmat-Teleskop mit drei asphärischen Spiegeln, welches mindestens einen ersten konkaven Spiegel (M1), einen zweiten konvexen Spiegel (M2), einen dritten konkaven Spiegel (M3) und einen Detektor (D) umfasst und eine optische Achse (O) aufweist,

- wobei die drei Spiegel so angeordnet sind, dass der erste Spiegel (M1) und der zweite Spiegel (M2) von einem Objekt bis ins Unendliche ein Zwischenbild bilden, welches zwischen dem zweiten Spiegel und dem dritten Spiegel befindlich ist, wobei der dritte Spiegel (M3) von diesem Zwischenbild ein endgültiges Bild in der Brennebene des Teleskops bildet, in welcher der Detektor platziert ist, wobei der erste, der zweite und der dritte Spiegel eine fixe Form aufweisen, welche durch mindestens einen Krümmungsradius und eine Kegeligkeit gekennzeichnet ist,

wobei das Teleskop ferner Folgendes umfasst:

- Mittel (5) zur linearen Verschiebung des dritten Spiegels (M3) auf der optischen Achse (O) des Teleskops in einer Weise, dass die Brennweite des Teleskops zwischen mindestens einer Mindest-Brennweite (fmin) und einer Höchst-Brennweite (fmax) variiert wird,

wobei das Teleskop bei der Mindest-Brennweite eine erste Ausgangspupille (PS1) an einer ersten Position (P1) aufweist, und das Teleskop bei der Höchst-Brennweite eine zweite Ausgangspupille (PS2) an einer zweiten Position (P2) aufweist,
**dadurch gekennzeichnet, dass** das Teleskop ferner Folgendes umfasst:

- einen verformbaren und steuerbaren Spiegel (MD), welcher eine verformbare Oberfläche aufweist und in einer mittleren fixen Position (Pm) angeordnet ist, welche sich zwischen der ersten und der zweiten Position befindet,
- Mittel (10, 10') zur Variation des Strahlengangs zwischen dem verformbaren Spiegel (MD) und dem Detektor (D), welche so konfiguriert sind, dass der erste Detektor in der Brennebene des Teleskops positioniert bleibt,
- wobei der dritte Spiegel eine Kegeligkeit (c'3) aufweist, welche anhand einer Anfangskegeligkeit (c3) bestimmt wird,
wobei die Anfangskegeligkeit (c3) anhand der Korsch-Gleichungen bestimmt wird,
wobei die Kegeligkeit (c'3) so bestimmt wird, dass das Teleskop, ohne das Vorhandensein des verformbaren Spiegels und für die Mindest- und die Höchst-Brennweite durch den verformbaren Spiegel (MD) kompensierbare Astigmatismus- und Koma-Aberrationen aufweist,

- wobei die mittlere fixe Position (Pm) des verformbaren Spiegels und die Form der Oberfläche jeweils für die Werte der Mindest-Brennweite (Smin) und der Höchst-Brennweite (Smax) so bestimmt werden, dass die kompensierbaren Aberrationen korrigiert werden und die Bildqualität in der Brennebene des Teleskops gemäß einem vorbestimmten Kriterium optimiert wird, wobei die Form der Oberfläche des verformbaren Spiegels mindestens eine erste und eine zweite Aberrationskategorie umfasst, wobei die erste Operation Kategorie die sphärischen Aberration erster Ordnung ($Z9_{MD}$) und die zweite Aberrationskategorie der Fokus ($Z4_{MD}$) ist.

2. Teleskop nach Anspruch 1, wobei die Form der Oberfläche des verformbaren Spiegels ferner eine sphärische Aberration zweiter Ordnung ($Z16_{MD}$) umfasst, um die Bildqualität gemäß dem Kriterium weiter zu verbessern.

3. Teleskop nach einem der vorhergehenden Ansprüche, wobei die Kegeligkeit (c'3) von der Anfangskegeligkeit um über 5 % und um unter 30 % abweicht.

4. Teleskop nach einem der vorhergehenden Ansprüche, wobei eine Kegeligkeit des ersten Spiegels (c'1) und eine Kegeligkeit des zweiten Spiegels (c'2) jeweils anhand einer Anfangsgkegeligkeit des ersten Spiegels (c1) und einer Anfangsgkegeligkeit des zweiten Spiegels (c2) bestimmt werden,
wobei die Anfangsgkegeligkeiten anhand der Korsch-Gleichungen bestimmt werden,
wobei die Kegeligkeiten so bestimmt werden, dass die Bildqualität des Teleskops gemäß dem Kriterium weiter verbessert wird.

5. Anastigmat-Teleskop nach einem der vorhergehenden Ansprüche, **dadurch gekennzeichnet, dass** die Oberfläche des verformbaren Spiegels anhand von Polynom-Koeffizienten definiert wird.

6. Teleskop nach einem der vorhergehenden Ansprüche, wobei man Folgendes definiert:

   - einen positiven Astigmatismus (A+) als einen Astigmatismus, bei welchem sich ein tangentialer Brennpunkt vor einem sagittalen Brennpunkt befindet,
   - einen negativen Astigmatismus (A-) als einen Astigmatismus, bei welchem sich ein sagittaler Brennpunkt vor einem tangentialen Brennpunkt befindet,
   - eine positive Koma als eine Koma, bei welcher eine Form des Bildflecks eines Quellpunktes ein "Komet" ist, dessen Schweif sich von der optischen Achse entfernt und,
   - eine negative Koma als eine Koma, bei welcher eine Form des Bildflecks eines Quellpunktes ein "Komet" ist, dessen Schweif in Richtung der optischen Achse gerichtet ist,
   wobei die kompensierbaren Aberrationen positiver Astigmatismus (A+) und positive Koma (C+) bei der Höchst-Brennweite, und positiver Astigmatismus (A+) und negative Koma (C-) bei der Mindest-Brennweite sind.

7. Teleskop nach einem der vorhergehenden Ansprüche, wobei man Folgendes definiert:

   - einen positiven Astigmatismus (A+) als einen Astigmatismus, bei welchem sich ein tangentialer Brennpunkt vor einem sagittalen Brennpunkt befindet,
   - einen negativen Astigmatismus (A-) als einen Astigmatismus, bei welchem sich ein sagittaler Brennpunkt vor einem tangentialen Brennpunkt befindet,
   und wobei die Kegeligkeit des dritten Spiegels (c'3) so bestimmt wird, dass das Vorzeichen des Astigmatismus des Teleskops für die Mindest-Brennweite, ohne Vorhandensein des verformbaren Spiegels, geändert wird.

8. Teleskop nach einem der vorhergehenden Ansprüche, wobei das vorbestimmte Kriterium darin besteht, einen Wellenformfehler (WFE) zu minimieren.

9. Teleskop nach einem der vorhergehenden Ansprüche, welches eine Vielzahl von Zwischen-Brennweiten aufweist, und wobei die Form der Oberfläche des verformbaren Spiegels (Sfi), welche mit jeder Zwischen-Brennweite (fi) assoziiert ist, anhand der Form der Oberfläche für die Werte der Mindest-Brennweite (Smin) und der Höchst-Brennweite (Smax) berechnet wird.

10. Verfahren (50) zur Bestimmung von Parametern eines Anastigmat-Teleskops, welches drei asphärische Spiegel umfasst, einen ersten konkaven Spiegel (M1), einen zweiten konvexen Spiegel (M2), einen dritten konkaven Spiegel (M3), einen Detektor (D), einen verformbaren und steuerbaren Spiegel (MD) und Mittel (5) zur linearen Verschiebung des dritten Spiegels auf einer optischen Achse (O) des Teleskops in einer Weise, dass die Brennweite des Teleskops zwischen einer Mindest-Brennweite (fmin) und einer Höchst-Brennweite (fmax) variiert wird,

wobei die drei Spiegel so angeordnet sind, dass der erste Spiegel und der zweite Spiegel von einem Objekt bis ins unendliche ein Zwischenbild bilden, welches zwischen dem zweiten Spiegel und dem dritten Spiegel befindlich ist, wobei der dritte Spiegel von diesem Zwischenbild ein endgültiges Bild in der Brennebene des Teleskops bildet, in welcher der Detektor platziert ist, wobei der erste, der zweite und der dritte Spiegel eine fixe Form aufweisen, welche durch mindestens einen Kegelschnitt und einen Krümmungsradius gekennzeichnet ist,

wobei das Teleskop bei der Mindest-Brennweite eine erste Ausgangspupille (PS1) an einer ersten Position (P1) aufweist, und das Teleskop bei der Höchst-Brennweite eine zweite Ausgangspupille (PS2) an einer zweiten Position (P2) aufweist,

wobei der verformbare Spiegel (MD) eine verformbare Oberfläche aufweist und an einer mittleren fixen Position (Pm) angeordnet ist, welche sich zwischen der ersten und der zweiten Position befindet,

wobei das Verfahren folgende Schritte umfasst:

- Bestimmen (100) von Werten der Kegelschnitte und der Krümmungsradien, genannt Anfangswerte des ersten (c1, R1), des zweiten (c2, R2) und des dritten (c3, R3) Spiegels des Teleskops, welche mit der Mindest-Brennweite (fmin) und der Höchst-Brennweite (fmax) kompatibel sind, ohne Vorhandensein des verformbaren Spiegels, anhand der Korsh-Gleichungen, durch eine erste Optimierung der Bildqualität in der Brennebene des Teleskops gemäß einem vorbestimmten Kriterium,

- Bestimmen (200) eines Kegeligkeitswertes des dritten Spiegels (c'3inf) anhand der Anfangskegeligkeit des dritten Spiegels (c3), ab welcher das Teleskop, ohne das Vorhandensein des verformbaren Spiegels und für die Mindest-und die Höchst-Brennweite, durch den verformbaren Spiegel (MD) kompensierbare Astigmatismus- und Koma-Aberrationen aufweist,

- Bestimmen (300) eines neuen Kegeligkeitswertes des dritten Spiegels (c'3), wobei die mittlere fixe Position (Pm) des verformbaren Spiegels und die Form seiner Oberfläche jeweils für die Werte der Mindest-Brennweite (Smin) und der Höchst-Brennweite (Smax) durch eine zweite Optimierung sodass die kompensierbaren Aberrationen korrigiert werden und die Bildqualität in der Brennebene des Teleskops gemäß dem vorbestimmten Kriterium optimiert wird,

wobei die Bestimmung der Form der Oberfläche des verformbaren Spiegels mindestens auf einer ersten und einer zweiten Aberrationskategorie basiert, wobei die erste Aberrationskategorie die sphärische Aberration erster Ordnung (Z9$_{MD}$) ist und die zweite Aberrationskategorie der Fokus (Z4$_{MD}$) ist.

11. Verfahren nach Anspruch 10, ferner umfassend einen Schritt des Bestimmens (400) einer neuen Kegeligkeit des ersten (c'1) und des zweiten (c'2) Spiegels in einer Weise, dass die Bildqualität gemäß dem vorbestimmten Kriterium weiter verbessert wird.

12. Verfahren nach Anspruch 11, ferner umfassend einen Schritt (500) des Verfeinerns der Bestimmung der Form der Oberfläche des verformbarem Spiegels (Smin, Smax), indem zusätzlich eine dritte Aberrationskategorie (Z16$_{MD}$) in einer Weise integriert wird, dass die Bildqualität gemäß dem vorbestimmten Kriterium weiter verbessert wird.

**Claims**

1. A three-aspherical-mirror anastigmat telescope comprising at least a concave first mirror (M1), a convex second mirror (M2), a concave third mirror (M3) and a detector (D), and having an optical axis (O),

- the three mirrors being arranged so that the first mirror (M1) and the second mirror (M2) form, from an object at infinity, an intermediate image between the second mirror and the third mirror, the third mirror (M3) forming, from this intermediate image, a final image in the focal plane of the telescope, in which plane the detector is placed, the first, second and third mirrors being of a set form **characterized by** at least a radius of curvature and a conicity,

the telescope furthermore comprising:

- means (5) for moving the third mirror (M3) linearly along the optical axis (O) of the telescope so as to make the focal length of the telescope change between at least a minimum focal length (fmin) and a maximum focal length (fmax),

the telescope having, at the minimum focal length, a first exit pupil (PS1) in a first position (P1), and the telescope having, at the maximum focal length, a second exit pupil (PS2) in a second position (P2), **characterized in that** the telescope further comprises:

- a deformable and controllable mirror (MD) having a deformable surface and placed in a fixed median position (Pm) between the first and second positions,
- means (10, 10') for changing the optical path between the deformable mirror (MD) and the detector (D), which means are configured so that the detector remains positioned in the focal plane of the telescope,
- the third mirror having a conicity (c'3) determined from an initial conicity (c3),

the initial conicity (c3) being determined from the Korsch equations,

the conicity (c'3) being determined so that the telescope has, in the absence of said deformable mirror and for the minimum and maximum focal lengths, astigmatism and coma aberrations that are compensable by said deformable mirror (MD),

- said fixed median position (Pm) of said deformable mirror and the form of its surface, for the minimum focal length (Smin) and maximum focal length (Smax) respectively, being determined so as to correct said compensable aberrations and to optimize image quality in the focal plane of the telescope according to a preset criterion, said form of the deformable mirror surface comprising at least a first and a second aberration category, the first aberration category being the first-order spherical aberration ($Z9_{MD}$) and the second aberration category being focus ($Z4_{MD}$).

2. The telescope according to claim 1, wherein the form of the surface of the deformable mirror further comprises a second-order spherical aberration ($Z16_{MD}$) to further improve image quality according to said criterion.

3. The telescope according to one of the preceding claims, wherein the conicity (c'3) differs from the initial conicity by more than 5% and by less than 30%.

4. The telescope according to one of the preceding claims, wherein a conicity (c'1) of the first mirror and a conicity (c'2) of the second mirror are respectively determined from an initial conicity (c1) of the first mirror and an initial conicity (c2) of the second mirror,

the initial conicities being determined from the Korsch equations,

the conicities being determined so as to further improve the image quality of said telescope according to said criterion.

5. The anastigmat telescope according to one of the preceding claims, **characterized in that** the surface of the deformable mirror is defined from coefficients of polynomials.

6. The telescope according to one of the preceding claims, wherein:

- a positive astigmatism (A+) is defined as an astigmatism for which a tangential focal point is located before a sagittal focal point,
- a negative astigmatism (A-) is defined as an astigmatism for which a sagittal focal point is located before a tangential focal point,
- a positive coma is defined as a coma for which a shape of the image spot of a point source is a "comet" the tail of which is directed away from the optical axis and,
- a negative coma is defined as a coma for which a shape of the image spot of a point source is a "comet" the tail of which is directed toward the optical axis,

the compensable aberrations being positive astigmatism (A+) and positive coma (C+) for the maximum focal length, and positive astigmatism (A+) and negative coma (C-) for the minimum focal length.

7. The telescope according to one of the preceding claims, wherein:

- a positive astigmatism (A+) is defined as an astigmatism for which a tangential focal point is located before a sagittal focal point,
- a negative astigmatism (A-) is defined as an astigmatism for which a sagittal focal point is located before a tangential focal point,

and wherein the conicity (c'3) of the third mirror is determined so as to modify the sign of the astigmatism of the telescope for the minimum focal length, in the absence of the deformable mirror.

8. The telescope according to one of the preceding claims, wherein the preset criterion consists in minimizing a wavefront error (WFE).

9. The telescope according to one of the preceding claims, having a plurality of intermediate focal lengths, and for which the form of the surface of the deformable mirror (Sfi) associated with each intermediate focal length (fi) is calculated from the form of the surface for the minimum focal length (Smin) and maximum focal length (Smax).

10. A method (50) for determining parameters of an anastigmat telescope comprising three-aspherical-mirror, a concave first mirror (M1), a convex second mirror (M2), a concave third mirror (M3), a detector (D), a deformable and controllable mirror (MD) and means (5) for moving the third mirror linearly along an optical axis (O) of the telescope so as to make the focal length of the telescope change between a minimum focal length (fmin) and a maximum focal length (fmax),

the three mirrors being arranged so that the first mirror and the second mirror form, from an object at infinity, an intermediate image between the second mirror and the third mirror, the third mirror forming, from this intermediate image, a final image in the focal plane of the telescope in which the detector is placed, the first, second and third mirrors being of a set form **characterized by** at least a conic and a radius of curvature,

the telescope having, at the minimum focal length, a first exit pupil (PS1) in a first position (P1), and the telescope having, at the maximum focal length, a second exit pupil (PS2) in a second position (P2),

the deformable mirror (MD) having a deformable surface and being placed in a fixed median position (Pm) between the first and second positions,

the method comprising steps consisting in:

- determining (100) conic and radii of curvature values, termed initial values, for the first (c1, R1), second (c2, R2) and third (c3, R3) mirrors of said telescope, that are compatible with the minimum focal length (fmin) and the maximum focal length (fmax), in the absence of said deformable mirror, from the Korsch equations, via a first optimization of the image quality in the focal plane of the telescope according to a preset criterion,
- determining (200) a conicity value (c'3inf) for the third mirror, from the initial conicity (c3) of the third mirror, from which the telescope has, in the absence of said deformable mirror and at the minimum and maximum focal lengths, astigmatism and coma aberrations that are compensable by said deformable mirror (MD),
- determining (300), via a second optimization, a new conicity value (c'3) for the third mirror , said fixed median position (Pm) of said deformable mirror and the form of its surface, for the minimum focal length (Smin) and maximum focal length (Smax) values respectively, so as to correct said compensable aberrations and to optimize image quality in the focal plane of the telescope according to the preset criterion,

the determination of the form of the surface of the deformable mirror being based on at least a first aberration category and a second aberration category, the first aberration category being the first-order spherical aberration (Z9MD) and the second aberration category being focus (Z4MD).

11. The method according to claim 10, further comprising a step consisting in determining (400) a new conicity of the first (c'1) and second (c'2) mirrors so as to further improve image quality according to the preset criterion.

12. The method according to claim 11, further comprising a step (500) consisting in refining the determination of the form of the surface of the deformable mirror (Smin, Smax) by furthermore incorporating a third aberration category (Z16$_{MD}$) so as to further improve image quality according to the preset criterion.

FIG.1

FIG.2a

FIG.2b

X

↑

→ z

M3

PS2

Pmax

FIG.3a

X

↑

→ z

M3

PS1

Pmin

FIG.3b

FIG.4a

20

$P_E$

M1

M2

M0

10'

D

$T1$

$P_{FI}$

M3

5

## FIG.4b

20

$P_E$

M1

M2

M0

T2

D

$T1$

M3

$P_{FI}$

5

## FIG.4c

Focale max

FIG.5a

Focale min

FIG.5b

FIG.6

FIG.7

FIG.8a

FIG.8b

FIG.9a

FIG.9b

⟨Z5/6⟩ UA

fmin

11

fmax

12

+

C3

-0.8    -0.7    -0.6    -0.5    C'3    -0.4    -0.3    Conicité de M3

C'3 inf

-

Conicité M3

FIG.10

FIG.11a

FIG.11b

FIG.12

EP 3 336 595 B1

FIG.13a

FIG.13b

FIG.14

EP 3 336 595 B1

FIG.15

EP 3 336 595 B1

FIG.16

EP 3 336 595 B1

Focale max

Z4  Z5/6  Z7/8  Z9

Champ Y (°)

0.6
0.4
0.2
-0.0
-0.2
-0.4
-0.6

-0.6 -0.4 -0.2 -0.0 0.2 0.4 0.6
Champ X (°)

—— 1 λ

—— 0.2 λ  —— 0.2 λ  —— 0.2 λ

## FIG.17a

Focale min

Z4  Z5/6  Z7/8  Z9

Champ Y (°)

0.6
0.4
0.2
-0.0
-0.2
-0.4
-0.6

-0.6 -0.4 -0.2 -0.0 0.2 0.4 0.6
Champ X (°)

—— 1 λ

—— 0.2 λ  —— 0.2 λ  —— 0.2 λ

## FIG.17b

EP 3 336 595 B1

50

Déterminer (R1,c1) ; (R2,c2) ; (R3, c3)
pour fmin et fmax
à partir des équations de Korch

100

Déterminer une valeur de conique de M3 c'3inf à
partir de laquelle le télescope présente, sans MD,
des aberrations compensables par le MD

200

Déterminer (c'3, Pm, Smin, Smax)
optimisant la qualité d'image

300

Déterminer (c'1, c'2)
de manière à augmenter la qualité d'image

400

Affiner Smin et Smax
en intégrant au MD une troisième aberration

500

# FIG.18

FIG.19

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6084727 A
- US 6333811 B
- US 4993818 A

- EP 1637914 A
- US 5144476 A

**Littérature non-brevet citée dans la description**

- **G.W. FORBES.** Characterizing the shape of freeform optics. *Optics Express,* 30 Janvier 2012, vol. 20 (3), 2483

- Three mirror anastigmatic zoom system using deformable mirrors. **ZHAO XIN et al.** INTERNATIONAL SYMPOSIUM ON PHOTOELECTRONIC DETECTION AND IMAGING 2011: SPACE EXPLORATION TECHNOLOGIES AND APPLICATIONS. SPIE, 09 Juin 2011, vol. 8196, 1-8